# EUROPEAN PATENT APPLICATION

(11) **EP 4 827 229 A1**
(43) Date of publication of application: **21.10.2026**
(21) Application number: 23961206.2
(22) Date of filing: 15.12.2023
(51) Int. Cl.: H04W 74/0833

(54) **PROCESSING METHOD, COMMUNICATION DEVICE, AND STORAGE MEDIUM**

(71) Applicant: Shenzhen Transsion Holdings Co., Ltd., Shenzhen, Guangdong 518057 (CN)
(72) Inventor: WANG, Sha, Shenzhen, Guangdong 518057 (CN); XIE, Yili, Shenzhen, Guangdong 518057 (CN); HUANG, Wei, Shenzhen, Guangdong 518057 (CN)
(74) Representative: Barker Brettell LLP
(86) International application number: PCT/CN2023/139220
(87) International publication number: WO 2025/123350

(57) **Abstract**

In the technical solution of the present application, by determining a random access occasion based on downlink information, where the random access occasion is an occasion at which a network device performs preamble detection, the network device is enabled to perform preamble detection only at the determined random access occasion, and the number of times that the network device blindly detects random access occasions is reduced, thereby reducing unnecessary signaling interactions, saving resources, and/or reducing energy consumption.

## Description

### TECHNICAL FIELD

The present application relates to the field of communication technologies, and in particular to a processing method, a communication device and a storage medium.

### BACKGROUND

In existing protocols, PRACH (Physical Random Access CHannel, Physical Random Access Channel) is an uplink physical channel in a communication system, primarily used by a terminal device to send a random access request to a network device to establish a wireless connection or ensure uplink synchronization.

During the conception and implementation of the present application, the inventors discovered at least the following problem. Since PRACH transmission is a periodic transmission channel, when there is no terminal device service, the network device does not know whether a terminal device is performing random access. Therefore, it needs to periodically perform preamble detection at specified random access occasions, which may lead to unnecessary signaling interactions and/or increase network energy consumption.

The foregoing description is provided to give general background information and does not necessarily constitute the prior art.

### TECHNICAL SOLUTION

A main objective of the present application is to provide a processing method, a communication device, and a storage medium, which aim to reduce unnecessary signaling interactions and/or reduce energy consumption.

A processing method provided by the present application, which can be applied to a terminal device (such as a mobile phone), including a step of:
S2, determining a random access occasion based on downlink information, where the random access occasion is an occasion at which a network device performs preamble detection.

Optionally, the downlink information includes at least one of radio resource control information, downlink control information, or medium access control information.

Optionally, the method further includes at least one of the following:
at least one of a period, a time domain position, and a frequency domain position of the random access occasion being determined by radio resource control information and/or downlink control information;
a time interval, between a slot where a physical downlink control channel carrying downlink control information is located and a slot where a start symbol of the random access occasion is located, being greater than a first threshold;
the random access occasion being used for contention-based random access and/or contention-free random access;
the random access occasion being used for 2-step random access and/or 4-step random access;
the downlink control information includes at least one of the following:
   a random access request field;
   a random access configuration index field;
   a no system information transmission field;
   an indication field for cell discontinuous transmission and/or cell discontinuous reception.

Optionally, determining the random access occasion based on the downlink information, includes at least one of the following:
determining the random access occasion based on radio resource control information and/or downlink control information;
determining the random access occasion based on radio resource control information and/or medium access control information.

Optionally, determining the random access occasion based on the downlink information, includes at least one of the following:
determining a first random access configuration based on the radio resource control information, and enabling or disabling all random access occasions within a random access configuration period or a random access association period in the first random access configuration according to a random access request field in the downlink control information;
determining a first random access configuration based on the radio resource control information, and enabling or disabling all random access occasions within a random access configuration period or a random access association period in the first random access configuration for a first scenario and/or a second scenario according to a random access request field in the downlink control information;
determining a first random access configuration based on the radio resource control information, determining a second random access configuration according to the first random access configuration and a random access configuration index field in the downlink control information, and determining the random access occasion according to the second random access configuration;
determining a first random access configuration based on the radio resource control information, determining a second random access configuration for a first scenario and/or a second scenario according to the first random access configuration and a random access configuration index field in the downlink control information, and determining the random access occasion according to the second random access configuration;
determining a first random access configuration based on the radio resource control information, and enabling or disabling all random access occasions within a random access configuration period or a random access association period in the first random access configuration according to a random access request field in the medium access control information;
determining a first random access configuration based on the radio resource control information, and enabling or disabling all random access occasions within a random access configuration period or a random access association period in the first random access configuration for a first scenario and/or a second scenario according to a random access request field in the medium access control information;
determining a first random access configuration based on the radio resource control information, determining a second random access configuration according to the first random access configuration and a random access configuration index field in the medium access control information, and determining the random access occasion according to the second random access configuration;
determining a first random access configuration based on the radio resource control information, determining a second random access configuration for a first scenario and/or a second scenario according to the first random access configuration and a random access configuration index field in the medium access control information, and determining the random access occasion according to the second random access configuration.

Optionally, the method further includes at least one of the following:
the random access occasion being a valid random access occasion based on the downlink control information;
the random access occasion being a valid random access occasion based on the second random access configuration;
the first scenario being within an inactive time of cell discontinuous reception;
the second scenario being within an active time of cell discontinuous reception;
a preamble format determined by the second random access configuration being the same as a preamble format determined by the first random access configuration;
a period of a random access occasion determined by the second random access configuration being a preset multiple of a period of a random access occasion determined by the first random access configuration;
the number of synchronization signal blocks associated with a random access occasion determined by the second random access configuration being the same as the number of synchronization signal blocks associated with a random access occasion determined by the first random access configuration.

Optionally, the method further includes:
in response to satisfying a first trigger event, sending msg1 and/or msgA including a preamble at the random access occasion.

Optionally, satisfying the first trigger event includes at least one of the following:
initiating initial access from a radio resource control idle state;
a radio resource control connection re-establishment procedure;
uplink data arrival during a radio resource control connected state, and no physical uplink control channel resources available for a scheduling request;
a scheduling request failure;
initiating an access request by radio resource control during synchronization reconfiguration;
transitioning from a radio resource control inactive state to another state;
requesting other system information.

The present application further provides a processing method, which can be applied to a network device (such as a base station), including a step of:
S1, sending downlink information for a terminal device to determine a random access occasion based on the downlink information, where the random access occasion is an occasion at which a network device performs preamble detection.

Optionally, the downlink information includes at least one of radio resource control information, physical downlink control information, or medium access control information.

Optionally, the method further includes at least one of the following:
at least one of a period, a time domain position, and a frequency domain position of the random access occasion being determined by radio resource control information and/or downlink control information;
a time interval, between a slot where a physical downlink control channel carrying downlink control information is located and a slot where a start symbol of the random access occasion is located, being greater than a first threshold;
the random access occasion being used for contention-based random access and/or contention-free random access;
the random access occasion being used for 2-step random access and/or 4-step random access;
the downlink control information includes at least one of the following:
   a random access request field;
   a random access configuration index field;
   a no system information transmission field;
   an indication field for cell discontinuous transmission and/or cell discontinuous reception.

Optionally, the step in which the terminal device determines the random access occasion based on the downlink information includes at least one of the following:
determining, by the terminal device, the random access occasion based on radio resource control information and/or downlink control information;
determining, by the terminal device, the random access occasion based on radio resource control information and/or medium access control information.

Optionally, the step in which the terminal device determines the random access occasion based on the downlink information includes at least one of the following:
determining, by the terminal device, a first random access configuration based on the radio resource control information, and enabling or disabling all random access occasions within a random access configuration period or a random access association period in the first random access configuration according to a random access request field in the downlink control information;
determining, by the terminal device, a first random access configuration based on the radio resource control information, and enabling or disabling all random access occasions within a random access configuration period or a random access association period in the first random access configuration for a first scenario and/or a second scenario according to a random access request field in the downlink control information;
determining, by the terminal device, a first random access configuration based on the radio resource control information, determining a second random access configuration according to the first random access configuration and a random access configuration index field in the downlink control information, and determining the random access occasion according to the second random access configuration;
determining, by the terminal device, a first random access configuration based on the radio resource control information, determining a second random access configuration for a first scenario and/or a second scenario according to the first random access configuration and a random access configuration index field in the downlink control information, and determining the random access occasion according to the second random access configuration;
determining, by the terminal device, a first random access configuration based on the radio resource control information, and enabling or disabling all random access occasions within a random access configuration period or a random access association period in the first random access configuration according to a random access request field in the medium access control information;
determining, by the terminal device, a first random access configuration based on the radio resource control information, and enabling or disabling all random access occasions within a random access configuration period or a random access association period in the first random access configuration for a first scenario and/or a second scenario according to a random access request field in the medium access control information;
determining, by the terminal device, a first random access configuration based on the radio resource control information, determining a second random access configuration according to the first random access configuration and a random access configuration index field in the medium access control information, and determining the random access occasion according to the second random access configuration;
determining, by the terminal device, a first random access configuration based on the radio resource control information, determining a second random access configuration for a first scenario and/or a second scenario according to the first random access configuration and a random access configuration index field in the medium access control information, and determining the random access occasion according to the second random access configuration.

Optionally, the method further includes at least one of the following:
the random access occasion being a valid random access occasion based on the downlink control information;
the random access occasion being a valid random access occasion based on the second random access configuration;
the first scenario being within an inactive time of cell discontinuous reception;
the second scenario being within an active time of cell discontinuous reception;
a preamble format determined by the second random access configuration being the same as a preamble format determined by the first random access configuration;
a period of a random access occasion determined by the second random access configuration being a preset multiple of a period of a random access occasion determined by the first random access configuration;
the number of synchronization signal blocks associated with a random access occasion determined by the second random access configuration being the same as the number of synchronization signal blocks associated with a random access occasion determined by the first random access configuration.

The present application further provides a communication device, including: a memory, a processor, and a processing program stored on the memory and executable on the processor, when the processing program is executed by the processor, the step of any one of the aforementioned processing methods is implemented.

The communication device in the present application may be a terminal device (such as a mobile phone) or a network device (such as a base station). The specific reference should be clarified based on the context.

The present application further provides a storage medium in which a computer program is stored, when the computer program is executed by a processor, the step of any one of the aforementioned processing methods is implemented.

In the technical solution of the present application, by determining a random access occasion based on downlink information, where the random access occasion is an occasion at which a network device performs preamble detection, the network device is enabled to perform preamble detection only at the determined random access occasion, which reduces the number of times that the network device blindly detects random access occasions, thereby reducing unnecessary signaling interactions, saving resources, and/or reducing energy consumption.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.
FIG. 1 is a schematic diagram of a hardware structure of a mobile terminal which implements various embodiments of the present application.
FIG. 2 is an architecture diagram of a communication network system provided by an embodiment of the present application.
FIG. 3 is a schematic diagram of a hardware structure of a controller 140 provided by the present application.
FIG. 4 is a schematic diagram of a hardware structure of a network node 150 provided by the present application.
FIG. 5 is a schematic flowchart of a processing method according to a first embodiment.
FIG. 6 is a schematic flowchart of a processing method according to a second embodiment.
FIG. 7 is a schematic flowchart of a processing method according to a third embodiment.
FIG. 8 is a schematic diagram of a first example according to a fourth embodiment.
FIG. 9 is a schematic diagram of a second example according to a fourth embodiment.
FIG. 10 is a schematic diagram of a third example according to a fourth embodiment.
FIG. 11 is a schematic diagram of a first example according to a fifth embodiment.
FIG. 12 is a schematic diagram of a second example according to a fifth embodiment.
FIG. 13 is a schematic diagram of a first example according to a sixth embodiment.
FIG. 14 is a schematic diagram of a first example according to a seventh embodiment.
FIG. 15 is a schematic diagram of a first example according to a ninth embodiment.
FIG. 16 is a schematic diagram of a second example according to a ninth embodiment.
FIG. 17 is a schematic diagram of a third example according to a ninth embodiment.
FIG. 18 is a schematic diagram of a fourth example according to a ninth embodiment.
FIG. 19 is a schematic diagram of a first example according to a tenth embodiment.
FIG. 20 is a schematic flowchart of a processing method according to an eleventh embodiment.
FIG. 21 is a schematic diagram of an interaction sequence according to a twelfth embodiment.
FIG. 22 is a first structural schematic diagram of a processing apparatus provided by an embodiment of the present application.
FIG. 23 is a second structural schematic diagram of a processing apparatus provided by an embodiment of the present application.
FIG. 24 is a structural schematic diagram of a communication device provided by an embodiment of the present application.

The implementation of the objectives, functional features, and advantages of the present application will be further described in combination with embodiments and with reference to the accompanying drawings. Through the above drawings, explicit embodiments of the present application have been shown, and more detailed descriptions will be provided in the following. These drawings and textual descriptions are not intended to limit the scope of the concepts of the present application in any way, but to explain the concepts of the present application to those skilled in the art through reference to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatuses and methods consistent with aspects of the present application as detailed in the appended claims.

It should be noted that, herein, the terms "include", "contain", or any other variation thereof are intended to cover a non-exclusive inclusion, such that a process, method, article, or apparatus that includes a list of elements does not include only those elements but may also include other elements not expressly listed or inherent to such process, method, article, or apparatus. Without further limitation, an element defined by the phrase "include a..." does not preclude the presence of additional identical elements in the process, method, article, or apparatus that includes the element. And/or, components, features and elements with the same name in different embodiments of the present application may have the same meaning or may have different meanings. Their specific meanings need to be determined by their interpretations within the specific embodiments or in further combination with the context of that specific embodiment.

It should be understood that although the terms "first", "second", "third", etc. may be used herein to describe various information, such information should not be limited by these terms. These terms are only used to distinguish information of the same type from another. For example, without departing from the scope of the specification, first information may also be referred to as second information, and similarly, second information may also be referred to as first information. Depending on the context, the word "if" as used herein may be interpreted as "when" or "upon" or "in response to determining". Furthermore, as used herein, the singular forms "a/an", "one" and "the" are intended to include the plural forms as well, unless the context clearly indicates otherwise. It should be further understood that the terms "contain" and "include" indicate the presence of the stated features, steps, operations, elements, components, items, kinds, and/or groups, but do not preclude the presence, occurrence or addition of one or more other features, steps, operations, elements, components, items, kinds, and/or groups. Terms used in the present application such as "or", "and/or", "include at least one of the following", etc. may be interpreted as inclusive or meaning any one or any combination. For example, "include at least one of the following: A, B, C" means "any one of the following: A; B; C; A and B; A and C; B and C; A and B and C". As another example, "A, B or C" or "A, B and/or C" means "any one of the following: A; B; C; A and B; A and C; B and C; A and B and C". An exception to this definition occurs only when a combination of elements, functions, steps, or operations is inherently mutually exclusive in some manner.

It should be understood that although various steps in the flowcharts in the embodiments of the present application are shown in an order indicated by arrows, these steps are not necessarily performed in the order indicated by the arrows. Unless explicitly stated herein, the execution of these steps is not strictly limited in order and may be performed in other orders. Moreover, at least a portion of the steps in the figures may include a plurality of sub-steps or stages, which are not necessarily executed at the same time but may be executed at different times. Their execution order is not necessarily sequential, and they may be performed alternately or in rotation with other steps or at least a portion of sub-steps or stages of other steps.

Depending on the context, the words "if" and "when" as used herein may be interpreted as "when" or "upon" or "in response to determining" or "in response to detecting". Similarly, depending on the context, the phrases "if it is determined" or "if (a stated condition or event) is detected" may be interpreted as "when it is determined" or "in response to determining" or "when (a stated condition or event) is detected" or "in response to detecting (a stated condition or event)".

It should be noted that, herein, step designations such as S1, S2, etc. are used for the purpose of describing the corresponding content more clearly and concisely, and do not constitute a substantive limitation on the order. In specific implementation, those skilled in the art may execute S2 before S1, etc., but all such variations shall fall within the protection scope of the present application.

It should be understood that the specific embodiments described herein are merely intended to explain the present application and are not intended to limit the present application.

In the following description, suffixes such as "module", "component", or "unit" used to denote elements are only for facilitating the description of the present application and have no specific meaning per se. Therefore, "module", "component", and "unit" may be used interchangeably.

The communication device in the present application may be a terminal device (such as a mobile phone) or a network device (such as a base station). The specific reference should be clarified based on the context.

The terminal device may be implemented in various forms. For example, the terminal device described in the present application may include a smart terminal device such as a mobile phone, a tablet computer, a laptop, a palmtop computer, a personal digital assistant (Personal Digital Assistant, PDA), a portable media player (Portable Media Player, PMP), a navigation apparatus, a wearable device, a smart bracelet, a pedometer, etc., as well as a fixed terminal device such as a digital TV, a desktop computer, etc.

In the following description, a mobile terminal will be used as an example for illustration. Those skilled in the art will understand that the configurations according to the embodiments of the present application can also be applied to a fixed-type terminal device, except for an element specifically for mobile purposes.

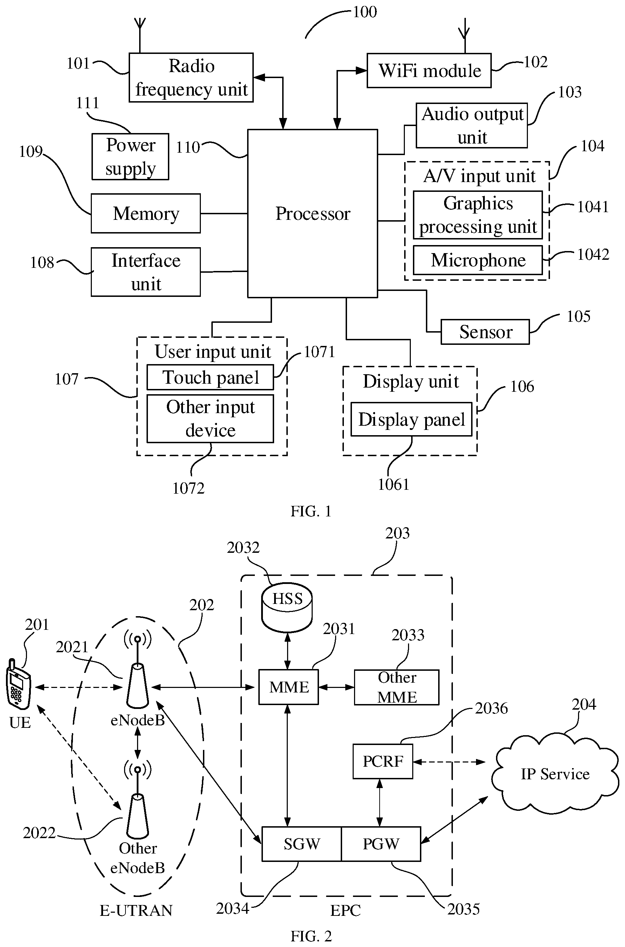

Please refer to FIG. 1, which is a schematic diagram of a hardware structure of a mobile terminal which implements various embodiments of the present application. The mobile terminal 100 may include: an RF (Radio Frequency, Radio frequency) unit 101, a WiFi module 102, an audio output unit 103, an A/V (audio/video) input unit 104, a sensor 105, a display unit 106, a user input unit 107, an interface unit 108, a memory 109, a processor 110, a power supply 111, and other components. Those skilled in the art will understand that the mobile terminal structure shown in FIG. 1 does not constitute a limitation on the mobile terminal. The mobile terminal may include more or fewer components than illustrated, combine some components, or have different component arrangements.

Each component of the mobile terminal will be described in detail with reference to FIG. 1:
The RF unit 101 may be configured for receiving and transmitting signals during information or call communication. Specifically, after downlink information is received from a base station, it is sent to the processor 110 for processing. Additionally, uplink data is transmitted to the base station. Generally, the RF unit 101 includes, but is not limited to, an antenna, at least one amplifier, a transceiver, a coupler, a low noise amplifier, a duplexer, etc. And/or, the RF unit 101 may also communicate with a network and other devices via wireless communication. The aforementioned wireless communication may use any communication standard or protocol, including but not limited to GSM (Global System of Mobile Communication, Global System of Mobile Communication), GPRS (General Packet Radio Service, General Packet Radio Service), CDMA2000 (Code Division Multiple Access 2000, Code Division Multiple Access 2000), WCDMA (Wideband Code Division Multiple Access, Wideband Code Division Multiple Access), TD-SCDMA (Time Division-Synchronous Code Division Multiple Access, Time Division-Synchronous Code Division Multiple Access), FDD-LTE (Frequency Division Duplexing-Long Term Evolution, Frequency Division Duplexing-Long Term Evolution), TDD-LTE (Time Division Duplexing-Long Term Evolution, Time Division Duplexing-Long Term Evolution), 5G, and 6G, etc.

WiFi is a short-range wireless transmission technology. Through the WiFi module 102, the mobile terminal can help users send and receive emails, browse web pages, and access streaming media, etc., providing users with wireless broadband Internet access. Although FIG. 1 shows the WiFi module 102, it should be understood that it is not an essential component of the mobile terminal and may be omitted as needed without changing the essence of the invention.

The audio output unit 103 may convert audio data, received by the radio frequency unit 101 or the WiFi module 102, or stored in the memory 109, into audio signals and output them as sound when the mobile terminal 100 is in a call signal reception mode, a call mode, a recording mode, a voice recognition mode, a broadcast reception mode, etc. Moreover, the audio output unit 103 may also provide audio output related to specific functions performed by the mobile terminal 100 (for example, call signal reception sound, message reception sound, etc.). The audio output unit 103 may include a speaker, a buzzer, etc.

The A/V input unit 104 is configured to receive audio or video signals. The A/V input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The processed image frame may be displayed on the display unit 106. The image frames processed by the graphics processing unit 1041 may be stored in the memory 109 (or other storage medium) or transmitted via the radio frequency unit 101 or the WiFi module 102. The microphone 1042 may receive sound (audio data) via the microphone 1042 in operation modes such as a telephone call mode, a recording mode, a voice recognition mode, etc., and can process such sound into audio data. The processed audio (voice) data may be converted into a format that can be transmitted to a mobile communication base station via the radio frequency unit 101 and output in the case of a telephone call mode. The microphone 1042 may implement various types of noise cancellation (or suppression) algorithms to cancel (or suppress) noise or interference generated during the reception and transmission of audio signals.

The mobile terminal 100 further includes at least one type of sensor 105, such as a light sensor, a motion sensor, and other sensors. Optionally, the light sensor includes an ambient light sensor and a proximity sensor. Optionally, the ambient light sensor may adjust the brightness of the display panel 1061 according to the brightness of ambient light. The proximity sensor may turn off the display panel 1061 and/or backlight when the mobile terminal 100 is moved to the ear. As a type of a motion sensor, an accelerometer sensor can detect the magnitude of acceleration in various directions (generally three axes). When it is stationary, it can detect the magnitude and direction of gravity, and can be used for applications recognizing the posture of the mobile phone (such as screen orientation switching, related games, magnetometer posture calibration), vibration recognition related functions (such as pedometer, tapping), etc. As for other sensors that may be configured on the mobile phone, such as a fingerprint sensor, a pressure sensor, an iris sensor, a molecular sensor, a gyroscope, a barometer, a hygrometer, a thermometer, an infrared sensor, etc., which will not be detailed here.

The display unit 106 is configured to display information input by the user or information provided to the user. The display unit 106 may include a display panel 1061, which may be configured using a liquid crystal display (Liquid Crystal Display, LCD), an organic light-emitting diode (Organic Light-Emitting Diode, OLED), or other forms.

The user input unit 107 may be configured to receive input numeric or character information and generate key signal inputs related to user settings and functional control of the mobile terminal. Optionally, the user input unit 107 may include a touch panel 1071 and other input device 1072. The touch panel 1071, also known as a touch screen, may collect touch operations of the user on or near it (for example, operations performed by a user using a finger, stylus, or any suitable object or accessory on or near the touch panel 1071) and drive corresponding connection apparatuses according to preset programs. The touch panel 1071 may include two parts: a touch detection apparatus and a touch controller. Optionally, the touch detection apparatus detects the user's touch orientation and detects signals brought by the touch operation, then transmits the signals to the touch controller. The touch controller receives touch information from the touch detection apparatuses, converts it into contact coordinates, and transmits them to the processor 110, and can also receive and execute commands from the processor 110. And/or, the touch panel 1071 may be implemented in various types such as resistive, capacitive, infrared, and surface acoustic wave. In addition to the touch panel 1071, the user input unit 107 may also include other input device 1072. Optionally, the other input device 1072 may include, but is not limited to, one or more of a physical keyboard, a function key (such as a volume control button, a switch button, etc.), a trackball, a mouse, a joystick, etc., which is not specifically limited here.

Optionally, the touch panel 1071 may cover the display panel 1061. When the touch panel 1071 detects a touch operation on or near it, it transmits the information to the processor 110 to determine the type of touch event. Then, the processor 110 provides corresponding visual output on the display panel 1061 according to the type of touch event. Although the touch panel 1071 and the display panel 1061 are implemented as two independent components to realize the input and output functions of the mobile terminal in FIG. 1, in some embodiments, the touch panel 1071 and the display panel 1061 may be integrated to realize the input and output functions of the mobile terminal, which is not specifically limited here.

The interface unit 108 serves as an interface through which at least one external apparatus can connect to the mobile terminal 100. For example, the external apparatus may include a wired or wireless headphone port, an external power supply (or battery charger) port, a wired or wireless data port, a memory card port, a port for connecting an apparatus with an identification module, an audio input/output (I/O) port, a video I/O port, an earphone port, etc. The interface unit 108 may be configured to receive input (for example, data information, power, etc.) from external device and transmit the received input to one or more elements within the mobile terminal 100, or may be configured for transmitting data between the mobile terminal 100 and the external apparatus.

The memory 109 may be configured to store a software program and various data. The memory 109 may mainly include a program storage area and a data storage area. Optionally, the program storage area may store an operating system, application programs required for at least one function (such as sound playback function, image playback function, etc.), etc. The data storage area may store data created according to the use of the mobile phone (such as audio data, phonebook, etc.). And/or, the memory 109 may include a high-speed random access memory and may also include a non-volatile memory, for example, at least one magnetic disk storage device, flash memory device, or other volatile solid-state storage devices.

The processor 110 is a control center of the mobile terminal, connecting various parts of the entire mobile terminal through various interfaces and lines. By running or executing software programs and/or modules stored in the memory 109 and calling data stored in the memory 109, it performs various functions of the mobile terminal and processes data, thereby monitoring the mobile terminal as a whole. The processor 110 may include one or more processing units. Preferably, the processor 110 may integrate an application processor and a modem processor. Optionally, the application processor mainly handles the operating system, the user interface, and the application program, etc., while the modem processor mainly handles wireless communication. It is understood that the aforementioned modem processor may also not be integrated into the processor 110.

The mobile terminal 100 may further include a power supply 111 (such as a battery) that supplies power to various components. Preferably, the power supply 111 may be logically connected to the processor 110 through a power management system, thereby implementing functions such as charging management, discharging management, and power consumption management through the power management system.

Although not shown in FIG. 1, the mobile terminal 100 may further include a Bluetooth module, etc., which will not be detailed here.

For the convenience of understanding the embodiments of the present application easily, a communication network system on which the mobile terminal of the present application is based is described below.

Please refer to FIG. 2, which is an architecture diagram of a communication network system provided by an embodiment of the present application. The communication network system is an NR (New Radio, New Radio) system of universal mobile communication technology. The NR system includes a UE (User Equipment, User Equipment) 201, an E-UTRAN (Evolved UMTS Terrestrial Radio Access Network, Evolved UMTS Terrestrial Radio Access Network) 202, an EPC (Evolved Packet Core, Evolved Packet Core) 203, and an operator's IP service 204, which are sequentially connected in communication.

Optionally, the UE 201 may be the aforementioned terminal device 100, which will not be detailed here.

The E-UTRAN 202 includes an eNodeB 2021 and other eNodeB 2022, etc. Optionally, the eNodeB 2021 may be connected to other eNodeB 2022 via a backhaul (backhaul) (such as an X2 interface). The eNodeB 2021 is connected to the EPC 203 and may provide the UE 201 with access to the EPC 203.

The EPC 203 may include an MME (Mobility Management Entity, Mobility Management Entity) 2031, an HSS (Home Subscriber Server, Home Subscriber Server) 2032, other MME 2033, an SGW (Serving Gate Way, Serving Gate Way) 2034, a PGW (PDN Gate Way, Packet Data Network Gate Way) 2035, and a PCRF (Policy and Charging Rules Function, Policy and Charging Rules Function) 2036, etc. Optionally, the MME 2031 is a control node that handles signaling between the UE 201 and the EPC 203, providing bearer and connection management. The HSS 2032 is configured to provide some registers to manage functions such as a home location register (not shown in the figure) and store some user-specific information such as service features, data rates, etc. All user data can be sent via the SGW 2034. The PGW 2035 may provide IP address allocation for the UE 201 and other functions. The PCRF 2036 is a policy and charging control policy decision point for service data flows and IP bearer resources. It selects and provides available policy and charging control decisions for the policy and charging enforcement function unit (not shown in the figure).

The IP service 204 may include Internet, intranet, IMS (IP Multimedia Subsystem, IP Multimedia Subsystem) or other IP services.

Although the LTE system is taken as an example for introduction in the above, those skilled in the art should understand that the present application is not only applicable to the LTE system, but also to other wireless communication systems, such as a GSM, a CDMA2000, a WCDMA, a TD-SCDMA, 5G, and a future new network system (such as 6G), etc., which are not limited here.

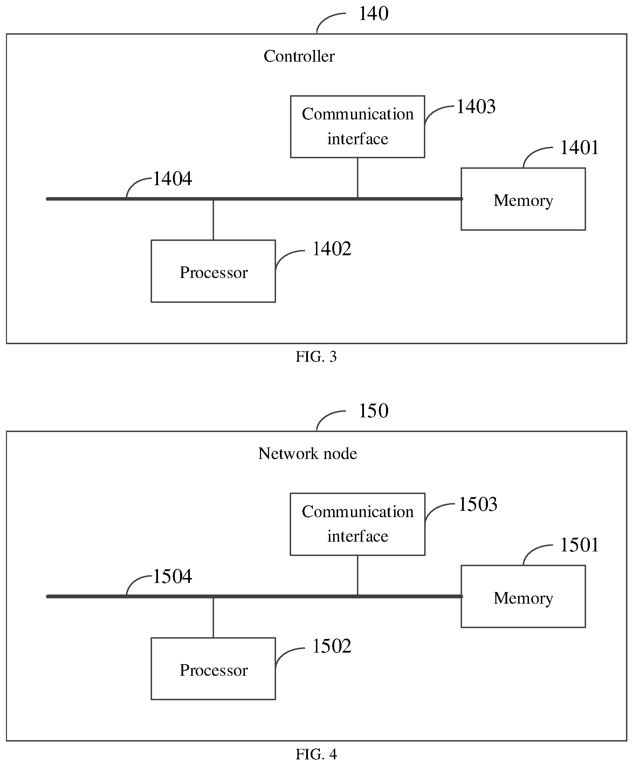

FIG. 3 is a schematic diagram of a hardware structure of a controller 140 provided by the present application. The controller 140 includes: a memory 1401 and a processor 1402. The memory 1401 is configured to store program instructions, and the processor 1402 is used to call the program instructions in the memory 1401 to execute the steps performed by the controller in the first method embodiment. The implementation principles and beneficial effects are similar and will not be detailed here.

Optionally, the aforementioned controller further includes a communication interface 1403, which may be connected to the processor 1402 via a bus 1404. The processor 1402 may control the communication interface 1403 to implement the receiving and transmitting functions of the controller 140.

FIG. 4 is a schematic diagram of a hardware structure of a network node 150 provided by the present application. The network node 150 includes: a memory 1501 and a processor 1502. The memory 1501 is configured to store program instructions, and the processor 1502 is configured to call the program instructions in the memory 1501 to execute the steps performed by the first node in the first method embodiment. The implementation principles and beneficial effects are similar and will not be detailed here.

Optionally, the aforementioned controller further includes a communication interface 1503, which may be connected to the processor 1502 via a bus 1504. The processor 1502 may control the communication interface 1503 to implement the receiving and transmitting functions of the network node 150.

The integrated modules implemented in the form of software functional modules as described above may be stored in a computer-readable storage medium. The software functional modules are stored in a storage medium, which includes several instructions to enable a computer device (which may be a personal computer, a server, a network device, etc.) or a processor (English: processor) to perform some steps of the methods in various embodiments of the present application.

The aforementioned embodiments may be implemented entirely or partially through software, hardware, firmware, or any combination thereof. When it is implemented through software, the embodiment may be entirely or partially implemented in the form of a computer program product. The computer program product includes one or more computer instructions. When the computer program instructions are loaded and executed on a computer, they entirely or partially generate the processes or functions according to the embodiments of the present application. The computer may be a general-purpose computer, a special-purpose computer, a computer network, or other programmable apparatuses. The computer instruction may be stored in a storage medium or transmitted from one storage medium to another storage medium. For example, the computer instruction may be transmitted from a website site, a computer, a server, or a data center to another website site, computer, server, or data center via wired means (for example, coaxial cable, optical fiber, digital subscriber line (DSL)) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid-state disk, solid-state disk, SSD), etc.

Various embodiments of the present application are proposed based on the hardware structure of the aforementioned mobile terminal and the communication network system.

### First Embodiment

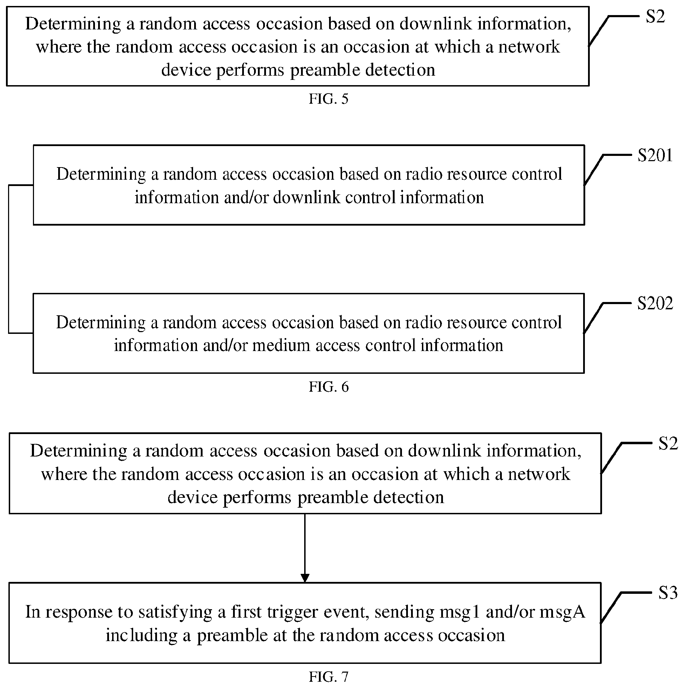

Referring to FIG. 5, which is a schematic flowchart of a processing method according to a first embodiment. The processing method of this embodiment can be applied to a terminal device (such as a mobile phone), including a step of:
S2, determining a random access occasion based on downlink information, where the random access occasion is an occasion at which a network device performs preamble detection.

Optionally, the downlink information includes at least one of radio resource control information, downlink control information, or medium access control information.

Optionally, the downlink control information includes at least one of the following:
a random access request field;
a random access configuration index field;
a no system information transmission field;
an indication field for cell discontinuous transmission and/or cell discontinuous reception.

Optionally, the network device sends downlink control information and/or radio resource control information including the random access request field to the terminal device, and the terminal device enables or disables all random access occasions within a random access configuration period or a random access association period according to the received downlink control information and/or radio resource control information; and/or, the terminal device enables or disables random access occasions within a random access configuration period or a random access association period in a first scenario and/or a second scenario according to the received downlink control information and/or radio resource control information.

Optionally, the network device sends downlink control information and/or radio resource control information including the random access configuration index field to the terminal device, the terminal device determines a second random access configuration according to the received downlink control information and/or radio resource control information, and determines the random access occasion according to the second random access configuration; and/or, the terminal device determines a second random access configuration for a first scenario and/or a second scenario according to the received downlink control information and/or radio resource control information, and determines the random access occasion according to the second random access configuration.

Optionally, the network device sends medium access control information and/or radio resource control information including the random access request field to the terminal device, and the terminal device enables or disables all random access occasions within a random access configuration period or a random access association period according to the received medium access control information and/or radio resource control information; and/or, the terminal device enables or disables random access occasions within a random access configuration period or a random access association period in a first scenario and/or a second scenario according to the received medium access control information and/or radio resource control information.

Optionally, the network device sends medium access control information and/or radio resource control information including the random access configuration index field to the terminal device, the terminal device determines a second random access configuration according to the received medium access control information and/or radio resource control information, and determines the random access occasion according to the second random access configuration; and/or, the terminal device determines a second random access configuration for a first scenario and/or a second scenario according to the received medium access control information and/or radio resource control information, and determines the random access occasion according to the second random access configuration.

Optionally, the first scenario is within an inactive time of cell discontinuous reception.

Optionally, the second scenario is within an active time of cell discontinuous reception.

Optionally, the random access occasion is a valid random access occasion based on the downlink control information.

Optionally, assuming that the number of bits of the random access request field in the downlink control information is 1, and a bit of 0 indicates that the current random access configuration period or random access association period is not enabled, and a bit of 1 indicates that the current random access configuration period or random access association period is enabled. The random access occasions indicated as valid by the downlink control information may be all random access occasions within the random access configuration period or random access association period indicated as enabled by the random access request field. The random access occasions indicated as valid by the downlink control information may also be all random access occasions within the random access configuration period or random access association period indicated as enabled by the random access request field in the first scenario and/or the second scenario.

Optionally, the random access occasion is a valid random access occasion based on the second random access configuration.

Optionally, the valid random access occasions are all random access occasions within the random access configuration period or random access association period determined based on the second random access configuration.

Optionally, the terminal device determines a first random access configuration based on the radio resource control information, determines a second random access configuration according to the first random access configuration and the random access configuration index field in the downlink control information, and determines the random access occasion according to the second random access configuration.

Optionally, the terminal device determines a first random access configuration based on the radio resource control information, determines a second random access configuration for a first scenario and/or a second scenario according to the first random access configuration and the random access configuration index field in the downlink control information, and determines the random access occasion according to the second random access configuration.

Optionally, determining the second random access configuration according to the first random access configuration and the random access configuration index field in the downlink control information includes at least one of the following:
a preamble format determined by the second random access configuration being the same as a preamble format determined by the first random access configuration;
a period of the random access occasion determined by the second random access configuration being a preset multiple of a period of the random access occasion determined by the first random access configuration;
the number of synchronization signal blocks associated with the random access occasion determined by the second random access configuration being the same as the number of synchronization signal blocks associated with the random access occasion determined by the first random access configuration.

Optionally, the period of the random access occasion determined by the second random access configuration is 2^N times the period of the random access occasion determined by the first random access configuration. Optionally, N is equal to {-4, -3, -2, -1, 0, 1, 2, 3, 4}.

Optionally, at least one of a period, a time domain position, and a frequency domain position of the random access occasion is determined by radio resource control information and/or downlink control information.

Optionally, a duration of the random access configuration period determined by the second random access configuration is related to the number of terminal devices in a current serving cell and/or the service frequency of the terminal device.

Optionally, at least one of a random access configuration period of the random access occasion, a random access association period of the random access occasion, a system frame number, a slot number and/or a starting symbol position in the time domain occupied by the random access occasion, and a frequency domain resource block index occupied by the random access occasion is determined by the radio resource control information and/or the downlink control information.

Optionally, a time interval, between a slot where a physical downlink control channel carrying downlink control information is located and a slot where a start symbol of the random access occasion is located, is greater than a first threshold.

Optionally, the first threshold is related to the capability of the terminal device.

Optionally, the random access occasion determined based on the downlink information may be used for contention-based random access and/or contention-free random access.

Optionally, the random access occasion determined based on the downlink information may be used for 2-step (2-step) random access and/or 4-step (4-step) random access.

Through the technical solution in this embodiment, specifically by determining a random access occasion based on downlink information, where the random access occasion is an occasion at which a network device performs preamble detection, the network device is enabled to adjust the position of the random access occasion for the terminal device to perform random access in time according to the number of terminal devices in the current serving cell and/or the service frequency of the terminal device, thereby reducing the number of times that the network device blindly detects each random access configuration period or random access association period, and reducing the energy consumption of the network device.

### Second Embodiment

Referring to FIG. 6, which is a schematic flowchart of a processing method according to a second embodiment. Based on the first embodiment of the present application, this embodiment further discloses a step S2, and the step S2 includes at least one of the following:
S201, determining the random access occasion based on radio resource control information and/or downlink control information;
S202, determining the random access occasion based on radio resource control information and/or medium access control information.

Optionally, the step S201 includes at least one of the following:
determining a first random access configuration based on the radio resource control information, and enabling or disabling all random access occasions within a random access configuration period or a random access association period in the first random access configuration according to a random access request field in the downlink control information;
determining a first random access configuration based on the radio resource control information, and enabling or disabling all random access occasions within a random access configuration period or a random access association period in the first random access configuration for a first scenario and/or a second scenario according to a random access request field in the downlink control information;
determining a first random access configuration based on the radio resource control information, determining a second random access configuration according to the first random access configuration and a random access configuration index field in the downlink control information, and determining the random access occasion according to the second random access configuration;
determining a first random access configuration based on the radio resource control information, determining a second random access configuration for a first scenario and/or a second scenario according to the first random access configuration and a random access configuration index field in the downlink control information, and determining the random access occasion according to the second random access configuration.

Optionally, the step S202 includes at least one of the following:
determining a first random access configuration based on the radio resource control information, and enabling or disabling all random access occasions within a random access configuration period or a random access association period in the first random access configuration according to a random access request field in the medium access control information;
determining a first random access configuration based on the radio resource control information, and enabling or disabling all random access occasions within a random access configuration period or a random access association period in the first random access configuration for a first scenario and/or a second scenario according to a random access request field in the medium access control information;
determining a first random access configuration based on the radio resource control information, determining a second random access configuration according to the first random access configuration and a random access configuration index field in the medium access control information, and determining the random access occasion according to the second random access configuration;
determining a first random access configuration based on the radio resource control information, determining a second random access configuration for a first scenario and/or a second scenario according to the first random access configuration and a random access configuration index field in the medium access control information, and determining the random access occasion according to the second random access configuration.

Optionally, the first random access configuration includes at least one of a random access configuration index, a subcarrier spacing of message 1 (msg1) and/or message A (msgA), the number of SSBs associated with each random access occasion, and the number of random access occasions contained in the frequency domain in one random access configuration period.

Optionally, the terminal device determines, based on the first random access configuration, at least one of a random access configuration period, a random access association period, a system frame number of the random access occasion within the random access configuration period, a slot number of the random access occasion within the random access configuration period, a starting symbol position of the random access occasion within the random access configuration period, a start position of frequency domain resource blocks of the random access occasion within the random access configuration period, or the number of random access occasions in one random access configuration period.

Optionally, the terminal device enables or disables, based on the random access request field in the downlink control information, the random access configuration period and/or the random access association period determined by the first random access configuration. If the random access request field in the downlink control information enables the random access configuration period and/or the random access association period, all random access occasions in the enabled random access configuration period and/or random access association period are the random access occasions for the network device to perform preamble detection.

Optionally, the terminal device enables or disables, based on the random access request field in the downlink control information, the random access configuration period and/or the random access association period determined by the first random access configuration for a first scenario and/or a second scenario. If the random access request field in the downlink control information enables the random access configuration period and/or the random access association period in the first scenario and/or the second scenario, then in the first scenario and/or the second scenario, all random access occasions in the enabled random access configuration period and/or random access association period are the random access occasions for the network device to perform preamble detection in the first scenario and/or the second scenario.

Optionally, the second random access configuration includes at least one of a random access configuration index, a subcarrier spacing of msg1 and/or msgA, the number of SSBs associated with each random access occasion, and the number of random access occasions contained in the frequency domain in one random access configuration period. Optionally, the random access configuration index field may be carried in the radio resource control information and/or the downlink control information.

Optionally, the terminal device determines, based on the second random access configuration, at least one of a random access configuration period, a random access association period, a system frame number of the random access occasion within the random access configuration period, a slot number of the random access occasion within the random access configuration period, a starting symbol position of the random access occasion within the random access configuration period, a start position of frequency domain resource blocks of the random access occasion within the random access configuration period, or the number of random access occasions in one random access configuration period.

Optionally, the terminal device determines the second random access configuration according to the first random access configuration and the random access configuration index field in the downlink control information. All random access occasions within the random access configuration period and/or the random access association period determined according to the second random access configuration are the random access occasions for the network device to perform preamble detection.

Optionally, the terminal device determines the second random access configuration for the first scenario and/or the second scenario according to the first random access configuration and the random access configuration index field in the downlink control information. All random access occasions within the random access configuration period and/or the random access association period determined according to the second random access configuration are the random access occasions for the network device to perform preamble detection in the first scenario and/or the second scenario.

Optionally, determining the second random access configuration according to the first random access configuration and the random access configuration index field in the downlink control information includes at least one of the following:
a preamble format determined by the second random access configuration being the same as a preamble format determined by the first random access configuration;
a period of the random access occasion determined by the second random access configuration being a preset multiple of a period of a random access occasion determined by the first random access configuration;
the number of synchronization signal blocks associated with a random access occasion determined by the second random access configuration being the same as the number of synchronization signal blocks associated with a random access occasion determined by the first random access configuration.

Optionally, the downlink control information includes at least one of the following:
a random access request field;
a random access configuration index field;
a no system information transmission field;
an indication field for cell discontinuous transmission and/or cell discontinuous reception.

Optionally, the terminal device enables or disables, based on the random access request field in the medium access control information, the random access configuration period and/or the random access association period determined by the first random access configuration. If the random access request field in the medium access control information enables the random access configuration period and/or the random access association period, all random access occasions in the enabled random access configuration period and/or random access association period are the random access occasions for the network device to perform preamble detection.

Optionally, the terminal device enables or disables, based on the random access request field in the medium access control information, the random access configuration period and/or the random access association period determined by the first random access configuration for a first scenario and/or a second scenario. If the random access request field in the medium access control information enables the random access configuration period and/or the random access association period in the first scenario and/or the second scenario, then in the first scenario and/or the second scenario, all random access occasions in the enabled random access configuration period and/or random access association period are the random access occasions for the network device to perform preamble detection in the first scenario and/or the second scenario.

Optionally, the second random access configuration includes at least one of a random access configuration index, a subcarrier spacing of msg1 and/or msgA, the number of SSBs associated with each random access occasion, and the number of random access occasions contained in the frequency domain in one random access configuration period. Optionally, the random access configuration index field may be carried in the radio resource control information and/or the medium access control information.

Optionally, the terminal device determines, based on the second random access configuration, at least one of a random access configuration period, a random access association period, a system frame number of the random access occasion within the random access configuration period, a slot number of the random access occasion within the random access configuration period, a starting symbol position of the random access occasion within the random access configuration period, a start position of frequency domain resource blocks of the random access occasion within the random access configuration period, or the number of random access occasions in one random access configuration period.

Optionally, the terminal device determines the second random access configuration according to the first random access configuration and the random access configuration index field in the medium access control information. All random access occasions within the random access configuration period and/or the random access association period determined according to the second random access configuration are the random access occasions for the network device to perform preamble detection.

Optionally, the terminal device determines the second random access configuration for the first scenario and/or the second scenario according to the first random access configuration and the random access configuration index field in the medium access control information. All random access occasions within the random access configuration period and/or the random access association period determined according to the second random access configuration are the random access occasions for the network device to perform preamble detection in the first scenario and/or the second scenario.

Through the technical solution of this embodiment, specifically by determining a random access occasion based on at least one of radio resource control information, downlink control information or medium access control information, the network device is enabled to adjust the position of the random access occasion for the terminal device to perform random access in time according to the number of terminal devices in the current serving cell and/or the service frequency of the terminal device, and/or, the network device is enabled to perform preamble detection only at the determined random access occasion, thereby reducing unnecessary signaling interactions, saving resources, and/or reducing energy consumption.

### Third Embodiment

Referring to FIG. 7, which is a schematic flowchart of a processing method according to a third embodiment. Based on any one of the above embodiments of the present application, this embodiment further discloses that the processing method further includes the following step:
S3, in response to satisfying a first trigger event, sending msg1 and/or msgA including a preamble at the random access occasion.

Optionally, when the first trigger event is satisfied, the terminal device sends msg1 and/or msgA including the preamble at the random access occasion determined based on the downlink information. For the process of determining the random access occasion based on the downlink information, reference may be made to any one of the foregoing embodiments, which will not be repeated in this embodiment.

Optionally, satisfying the first trigger event includes at least one of the following:
initiating initial access from a radio resource control idle state (RRC_IDLE);
a radio resource control (Radio Resource Control, RRC) connection re-establishment procedure;
uplink data or downlink data arrival during an RRC connected state, or, small data transmission (Small Data Transmission, SDT) transmission required during an RRC inactive state, while uplink synchronization status being out-of-sync at this time;
uplink data arrival during an RRC connected state, or, SDT transmission required in an RRC inactive state, while no Physical Uplink Control Channel (PUCCH) resources available for an SR request;
a scheduling request (Scheduling Request, SR) failure;
initiating an access request by radio resource control upon synchronization reconfiguration (for example, after handover, a UE needs to establish uplink synchronization with a new cell);
transitioning from a radio resource control inactive state (RRC_INACTIVE) to another state (for example, an RRC connection resume procedure from RRC_INACTIVE);
establishing time alignment for a secondary timing advance group (Timing Advance Group, TAG);
requesting other system information;
beam failure recovery;
consistent UL LBT failure on a special Cell (special Cell, SpCell);
small data transmission (Small Data Transmission, SDT) transmission in RRC_INACTIVE;
a random access procedure for positioning during RRC_CONNECTED, for example, when a timing advance is needed for UE positioning.

Optionally, in a dual connection (Dual Connetction, DC) scenario, SpCell refers to a primary cell (Primary Cell, Pcell) of a master cell group (Master Cell Group, MCG), or a primary cell of a secondary cell group (Secondary Cell Group, SCG). In other scenarios, SpCell refers to a Pcell.

Optionally, if initial access is initiated from an RRC_IDLE state, the terminal device sends msg1 and/or msgA including a preamble at the random access occasion determined based on the downlink information.

Optionally, if during an RRC connection re-establishment procedure, the terminal device sends msg1 and/or msgA including a preamble at the random access occasion determined based on the downlink information.

Optionally, if uplink or downlink data arrives during an RRC connected state, but the uplink synchronization status is out-of-sync at this time, the terminal device sends msg1 and/or msgA including a preamble at the random access occasion determined based on the downlink information.

Optionally, if SDT transmission is required during an RRC inactive state, but the uplink synchronization status is out-of-sync at this time, the terminal device sends msg1 and/or msgA including a preamble at the random access occasion determined based on the downlink information.

Optionally, if uplink data arrives during an RRC connected state, but no PUCCH (Physical Uplink Control CHannel, physical uplink control channel) resource is available for an SR (Scheduling Request, scheduling request), the terminal device sends msg1 and/or msgA including a preamble at the random access occasion determined based on the downlink information.

Optionally, if SDT transmission is required during an RRC inactive state, but no PUCCH (Physical Uplink Control CHannel, physical uplink control channel) resource is available for an SR (Scheduling Request, scheduling request), the terminal device sends msg1 and/or msgA including a preamble at the random access occasion determined based on the downlink information.

Optionally, if the SR fails, the terminal device sends msg1 and/or msgA including a preamble at the random access occasion determined based on the downlink information.

Optionally, if an access request is initiated by RRC during synchronization reconfiguration (such as handover), the terminal device sends msg1 and/or msgA including a preamble at the random access occasion determined based on the downlink information.

Optionally, if transitioning from the RRC_INACTIVE state to another state, the terminal device sends msg1 and/or msgA including a preamble at the random access occasion determined based on the downlink information.

Optionally, if requesting other system information, the terminal device sends msg1 and/or msgA including a preamble at the random access occasion determined based on the downlink information.

Optionally, if establishing time alignment for a secondary TAG, the terminal device sends msg1 and/or msgA including a preamble at the random access occasion determined based on the downlink information.

Optionally, if beam failure recovery takes place, the terminal device sends msg1 and/or msgA including a preamble at the random access occasion determined based on the downlink information.

Optionally, if consistent UL (Up-Link, Up-Link) LBT (Listen Before Talk) fails on a SpCell, the terminal device sends msg1 and/or msgA including a preamble at the random access occasion determined based on the downlink information.

Optionally, if SDT transmission is required during RRC_INACTIVE, the terminal device sends msg1 and/or msgA including a preamble at the random access occasion determined based on the downlink information.

Optionally, if a timing advance is needed for a random access procedure for positioning during RRC_CONNECTED (for example, when a timing advance is needed for UE positioning), the terminal device sends msg1 and/or msgA including a preamble at the random access occasion determined based on the downlink information.

Through the technical solution of this embodiment, specifically by sending msg1 and/or msgA including a preamble at the random access occasion determined based on downlink information in response to satisfying a first trigger event, an execution mechanism for the terminal device to send msg1 and/or msgA including the preamble is refined. Specifically, the terminal device determines a valid random access occasion based on the downlink information, then, under the first trigger event, the terminal device sends msg1 and/or msgA including the preamble at the valid random access occasion. Compared to the second embodiment, a restriction of the trigger event in the third embodiment may further reduce the number of times that the network device blindly detects random access occasions, reducing network energy consumption.

### Fourth Embodiment

Based on any one of the above embodiments of the present application, this embodiment further discloses a method for determining a first random access configuration based on radio resource control information, and enabling or disabling all random access occasions within a random access configuration period or a random access association period in the first random access configuration according to a random access request field in the downlink control information.

Optionally, determining the first random access configuration based on the radio resource control information includes: obtaining a time domain position and a frequency domain position of the random access occasion based on a random access configuration index (prach-ConfigurationIndex) field in the radio resource control information and Table 6.3.3.2-2, Table 6.3.3.2-3, and Table 6.3.3.2-4 in TS 38.211.

Optionally, the random access configuration period is determined by the random access configuration index (prach-ConfigurationIndex) field in the radio resource control information.

Optionally, for FR1 and FDD, the random access configuration period is determined using Table 6.3.3.2-2 in TS 38.211. Assuming that the prach-ConfigurationIndex in the radio resource control information takes a value of 9, then, according to the protocol, it is known that the terminal device transmits a preamble of format 0 in subframe 4 of system frames, where n*_{SFN}* mod4=1 (x=4, y=0. That is, system frames with n*_{SFN}* mod4 being equal to 1, 5, 9, ...). Therefore, the random access configuration period determined according to the random access configuration index field in the radio resource control information is 40 ms.

Optionally, all random access occasions within the random access configuration period in the first random access configuration are enabled or disabled according to the random access request field in the downlink control information. Optionally, the downlink control information is located within the random access configuration period indicated as enabled by the downlink control information. For example, assuming that there are a total of 32 random access occasions within one random access configuration period determined by the first random access configuration, and assuming that the value of the random access request field in the downlink control information included in this random access configuration period is 1, then, all 32 random access occasions within this random access configuration period are enabled.

Optionally, all random access occasions within the random access association period in the first random access configuration are enabled or disabled according to the random access request field in the downlink control information. Optionally, the downlink control information is located within the first random access configuration period corresponding to the random access association period indicated as enabled by the downlink control information. For example, assuming that there are a total of 32 random access occasions within one random access association period determined by the first random access configuration, and assuming that the value of the random access request field in the downlink control information corresponding to this random access association period is 1, then, the 32 random access occasions within this random access association period are enabled.

Optionally, one random access occasion may be associated with one or more SSBs.

Optionally, the random access association period is the minimum number of random access configuration periods required to complete one-time mapping of *N_{Tx}^{SSB}* SSBs to one random access occasion, and the value of the random access association period satisfies Table 1.

**Table 1: Example mapping between random access configuration periods and association periods for synchronization signal block to random access occasion mapping**

| Random access configuration period (ms) | Association period (number of random access configuration periods) |
|---|---|
| 10 | {1, 2, 4, 8, 16} |
| 20 | {1, 2, 4, 8} |
| 40 | {1, 2, 4} |
| 80 | {1, 2} |
| 160 | {1} |

Optionally, *N_{Tx}^{SSB}* is determined by a synchronization signal block burst position (ssb-PositionsInBurst) field in the radio resource control information.

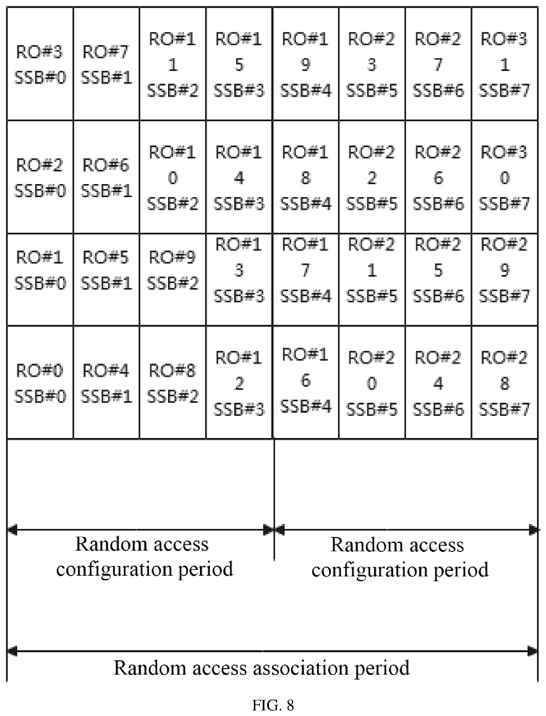

Referring to FIG. 8, which is a schematic diagram of a first example according to a fourth embodiment. Assuming that the ssb-PositionsInBurst field in the radio resource control information takes the value "11111111", therefore, the number of actually transmitted synchronization signal blocks within 5ms, *N_{Tx}^{SSB}*, is equal to 8, and the transmitted SSB indexes are {0, 1, 2, 3, 4, 5, 6, 7}. Assuming that a ssb-perRACH-OccasionAndCB-PreamblesPerSSB field in the radio resource control information takes a value of 1/4, therefore, one SSB is associated with four consecutive random access occasions. Assuming that a msg1-FDM field in the radio resource control information takes a value of 4, therefore, the number of random access occasions in the frequency domain within one random access configuration period is 4. Furthermore, if the number of random access occasions in the time domain within one random access configuration period is 4, then, it can be known that the number of random access occasions within one random access configuration period is 4 (number of random access occasions in frequency domain) * 4 (number of random access occasions in frequency domain) = 16. Based on the above assumptions, it is known that the number of random access occasions required to complete one full SSB mapping is 8 (number of SSBs) * 4 (number of random access occasions associated with one SSB) = 32. Therefore, one random access association period includes two random access configuration periods. FIG. 8 is a mapping diagram of the association relationship between SSBs and ROs.

Optionally, enabling or disabling all random access occasions within the random access configuration period or the random access association period in the first random access configuration according to the random access request field in the downlink control information, may only be applicable to a terminal device in a serving cell supporting network energy saving.

Optionally, under the first trigger event, the terminal device sends msg1 and/or msgA at the random access occasion within the random access configuration period enabled by the random access request field in the downlink control information.

Optionally, under the first trigger event, the terminal device sends msg1 and/or msgA at the random access occasion within the random access association period enabled by the random access request field in the downlink control information.

Optionally, for the first trigger event, reference may be made to the aforementioned third embodiment, which will not be repeated in this embodiment.

Optionally, all random access occasions within the random access configuration period in the first random access configuration are enabled or disabled according to the random access request field in the downlink control information. Optionally, the downlink control information is located within the random access configuration period indicated as enabled or disabled by the downlink control information.

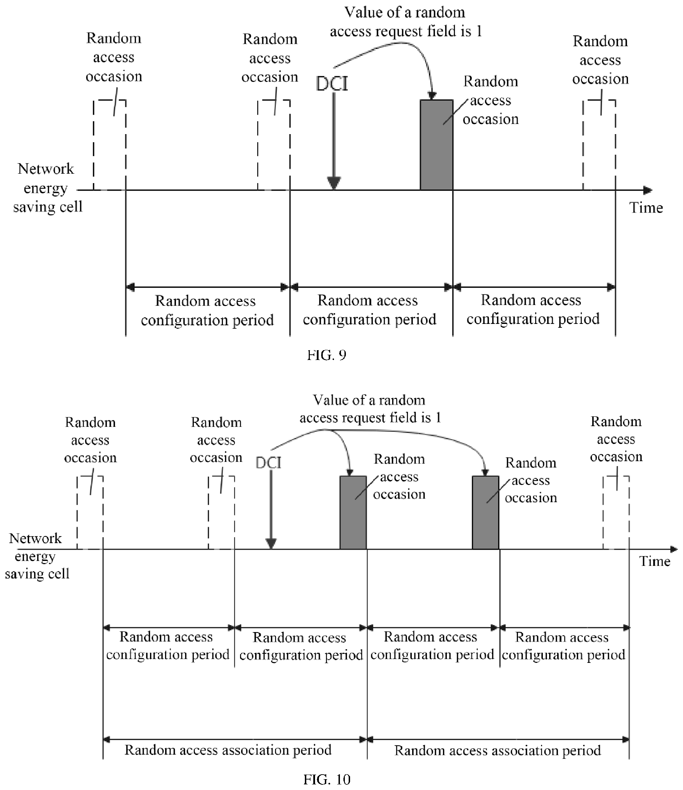

Referring to FIG. 9, which is a schematic diagram of a second example according to a fourth embodiment. As shown in FIG. 9, all random access occasions within the random access configuration period in the first random access configuration are enabled or disabled according to the random access request field in the downlink control information. When the value of the random access request field in the downlink control information is 1, all random access occasions within the random access configuration period where the downlink control information is located are enabled. When the value of the random access request field in the downlink control information is 0, all random access occasions within the random access configuration period where the downlink control information is located are disabled. When no downlink control information including the random access request field is received, all random access occasions within the random access configuration period where the downlink control information is located are disabled by default.

Optionally, all random access occasions within the random access association period in the first random access configuration are enabled or disabled according to the random access request field in the downlink control information. Optionally, the downlink control information is located within the first random access configuration period corresponding to the random access association period indicated as enabled by the downlink control information.

Referring to FIG. 10, which is a schematic diagram of a third example according to the fourth embodiment. As shown in FIG. 10, all random access occasions within one random access association period are enabled or disabled according to the random access request field in the downlink control information. When the value of the random access request field in the downlink control information in the first random access configuration period within the random access association period is 1, all random access occasions within the random access association period to which the random access configuration period belongs are enabled, where the downlink control information is located within the random access configuration period. When the value of the random access request field in the downlink control information in the first random access configuration period within the random access association period is 0, all random access occasions within the random access association period to which the random access configuration period belongs are disabled, where the downlink control information is located within the random access configuration period. When no downlink control information including the random access request field is received, all random access occasions within the random access association period to which the random access configuration period belongs are disabled by default, where the downlink control information is located within the random access configuration period.

Optionally, enabling or disabling all random access occasions within the random access association period in the first random access configuration according to the random access request field in the downlink control information, refers to, enabling or disabling all random access occasions associated with SSBs within the random access association period.

Through the technical solution of this embodiment, specifically by dynamically enabling or disabling all random access occasions within the random access configuration period or the random access association period in the first random access configuration through a newly added random access request field in the downlink control information, the network device is enabled to perform preamble detection only at the random access occasion enabled by the downlink control information, thereby reducing network energy consumption; and/or, the network device is enabled to adaptively enable or disable all random access occasions within the random access configuration period or the random access association period according to the number of terminal devices in the current serving cell and/or the service frequency of the terminal device, and notify the terminal device through the downlink control information, thereby reducing signaling interactions between the network device and the terminal device.

### Fifth Embodiment

Based on any one of the above embodiments of the present application, this embodiment further discloses a method for determining a first random access configuration based on radio resource control information, and enabling or disabling all random access occasions within a random access configuration period or a random access association period in the first random access configuration for a first scenario and/or a second scenario according to a random access request field in the downlink control information.

Optionally, the first scenario is within an inactive time of cell discontinuous reception (cell Discontinuous Reception, cell DRX).

Optionally, the second scenario is within an active time of cell discontinuous reception.

Optionally, determining the first random access configuration based on the radio resource control information includes: obtaining a time domain position and a frequency domain position of the random access occasion based on a random access configuration index (prach-ConfigurationIndex) field in the radio resource control information and Table 6.3.3.2-2, Table 6.3.3.2-3, and Table 6.3.3.2-4 in TS 38.211.

Optionally, the random access configuration period is determined by the random access configuration index (prach-ConfigurationIndex) field in the radio resource control information.

Optionally, when the serving cell where the terminal device is located supports cell DRX configuration, the terminal device may, within the active time of the cell DRX and the inactive time of the cell DRX, enable or disable all random access occasions within the random access configuration period or the random access association period in the first random access configuration according to the random access request field in the downlink control information.

Optionally, when the serving cell where the terminal device is located supports cell DRX configuration, the terminal device may, only within the inactive time of the cell DRX, enable or disable all random access occasions within the random access configuration period or the random access association period in the first random access configuration according to the random access request field in the downlink control information. While within the active time of the cell DRX, the terminal device enables random access occasions in all random access configuration periods or random access association periods in the first random access configuration determined according to the radio resource control information.

Optionally, one random access occasion may be associated with one or more SSBs.

Optionally, under the first trigger event, and in the first scenario and/or the second scenario, the terminal device sends msg1 and/or msgA at the random access occasion within the random access configuration period enabled by the random access request field in the downlink control information.

Optionally, under the first trigger event and within the inactive time of the cell DRX, the terminal device sends msg1 and/or msgA at the random access occasion within the random access configuration period enabled by the random access request field in the downlink control information.

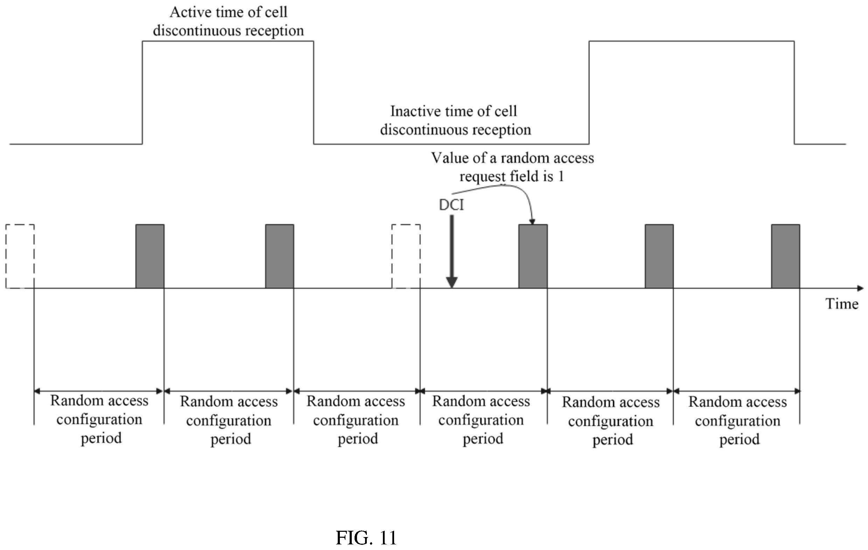

Referring to FIG. 11, which is a schematic diagram of a first example according to the fifth embodiment. As shown in FIG. 11, according to the random access request field in the downlink control information, the random access occasion within the random access configuration period in the first random access configuration within the inactive time of the cell DRX is enabled or disabled. Dark block represents that the random access occasion can be used for msg1 and/or msgA transmission. Within the inactive time of the cell DRX, when the value of the random access request field in the downlink control information is 1, all random access occasions within the random access configuration period where the downlink control information is located are enabled. Within the inactive time of the cell DRX, when the value of the random access request field in the downlink control information is 0, all random access occasions within the random access configuration period where the downlink control information is located are disabled. Within the inactive time of the cell DRX, when no downlink control information including the random access request field is received, all random access occasions within the random access configuration period where the downlink control information is located are disabled by default.

Optionally, under the first trigger event, and in the first scenario and/or the second scenario, the terminal device sends msg1 and/or msgA at the random access occasion within the random access association period enabled by the random access request field in the downlink control information.

Optionally, under the first trigger event and within the inactive time of the cell DRX, the terminal device sends msg1 and/or msgA at the random access occasion within the random access association period enabled by the random access request field in the downlink control information.

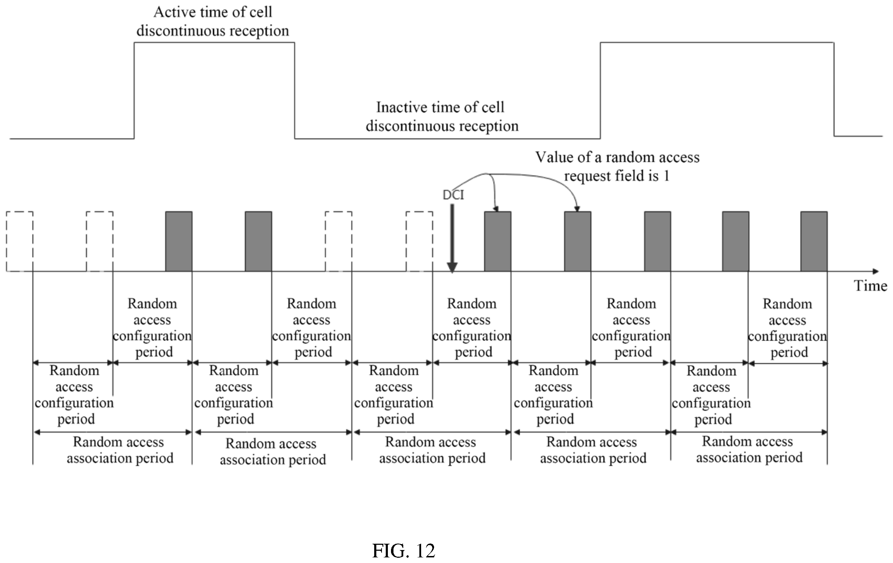

Referring to FIG. 12, which is a schematic diagram of a second example according to the fifth embodiment. As shown in FIG. 12, all random access occasions within one random access association period in the inactive time of the cell DRX are enabled or disabled according to the random access request field in the downlink control information. Optionally, the downlink control information is located in the first random access configuration period within the random access association period. It is assumed that one random access association period includes two random access configuration periods. Within the inactive time of the cell DRX, when the value of the random access request field in the downlink control information in the first random access configuration period within the random access association period is 1, all random access occasions within the random access association period to which the random access configuration period belongs are enabled, where the downlink control information is located within the random access configuration period. Within the inactive time of the cell DRX, when the value of the random access request field in the downlink control information in the first random access configuration period within the random access association period is 0, all random access occasions within the random access association period to which the random access configuration period belongs are disabled, where the downlink control information is located within the random access configuration period. Within the inactive time of the cell DRX, when no downlink control information including the random access request field is received, all random access occasions within the random access association period to which the random access configuration period belongs are disabled by default, where the downlink control information is located within the random access configuration period.

Optionally, within the inactive time of the cell DRX, enabling or disabling all random access occasions within the random access association period in the first random access configuration according to the random access request field in the downlink control information, refers to, enabling or disabling all random access occasions associated with SSBs within the random access association period.

Through the technical solution of this embodiment, specifically by enabling or disabling all random access occasions within the random access configuration period or the random access association period in the first scenario and/or the second scenario through a newly added random access request field in the downlink control information, the sleep duration of the network device in the first scenario and/or the second scenario is further increased, thereby reducing network energy consumption.

### Sixth Embodiment

Based on any one of the above embodiments of the present application, this embodiment further discloses a method for determining a first random access configuration based on radio resource control information, determining a second random access configuration according to the first random access configuration and a random access configuration index field in downlink control information, and determining a random access occasion according to the second random access configuration.

Optionally, determining the first random access configuration based on the radio resource control information includes: determining a random access configuration period, a preamble format, etc., based on the random access configuration index (prach-ConfigurationIndex) field in the radio resource control information.

Optionally, determining the second random access configuration according to the random access configuration index field in the downlink control information includes: determining a random access configuration period, a preamble format, etc., based on the random access configuration index field in the downlink control information.

Optionally, a preamble format determined by the second random access configuration is the same as a preamble format determined by the first random access configuration. A period of the random access occasion determined by the second random access configuration is a preset multiple of a period of the random access occasion determined by the first random access configuration. The number of synchronization signal blocks associated with the random access occasion determined by the second random access configuration is the same as the number of synchronization signal blocks associated with the random access occasion determined by the first random access configuration.

Optionally, a duration of the random access configuration period determined according to the random access configuration index field in the downlink control information is related to the number of terminal devices in the current serving cell and/or the service frequency of the terminal device.

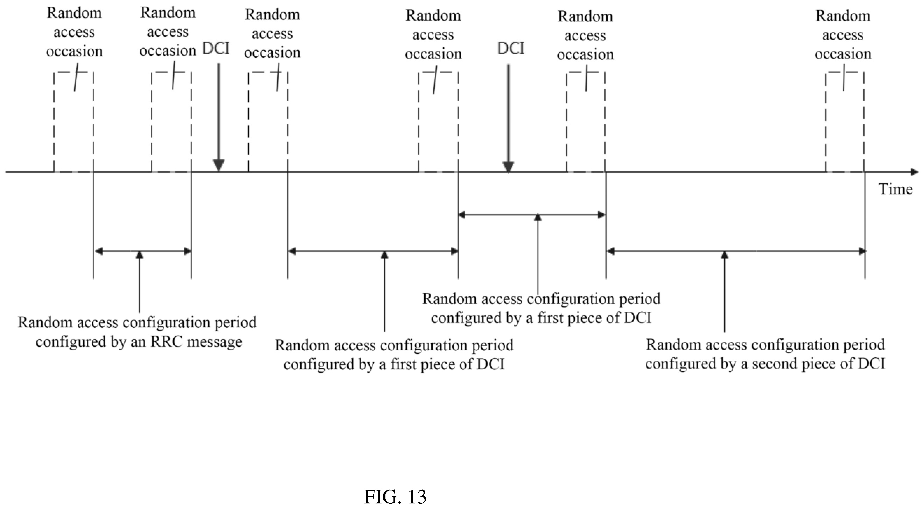

Referring to FIG. 13, which is a schematic diagram of a first example according to the sixth embodiment. As shown in FIG. 13, a first random access configuration is determined based on radio resource control information, a second random access configuration is determined according to the first random access configuration and the random access configuration index field in downlink control information, and random access occasions are determined according to the second random access configuration. For FR1 and FDD, the random access configuration period is determined using Table 6.3.3.2-2 in TS 38.211. It is assumed that a subcarrier spacing of PUSCH is 15kHz. If prach-ConfigurationIndex in the radio resource control information takes a value of 16, according to the protocol, it is known that the terminal device transmits a preamble of format 0 in subframe 1 of system frames, where n*_{SFN}* mod1 = 0 (x=1, y=0. That is, system frames with n*_{SFN}* mod1 being equal to 0, 1, 2, ...). Therefore, the random access configuration period determined based on the random access configuration index field in the radio resource control information is 10ms. If the number of terminal devices in the current serving cell decreases and/or the service frequency of the terminal device decreases, the network device can configure the value of the prach-ConfigurationIndex field in the DCI transmitted to the terminal device to 9. If the value of the prach-ConfigurationIndex field in DCI is 9, according to the protocol, it is known that the terminal device transmits a preamble of format 0 in subframe 4 of system frames, where n*_{SFN}* mod4=1 (x=4, y=1. That is, system frames with n*_{SFN}* mod4 being equal to 1, 5, 9, ...). Therefore, the random access configuration period determined according to the random access configuration index field in the downlink control information is 40 ms. Consequently, the random access configuration period of the terminal device changes from 10 ms to 40 ms. If the number of terminal devices in the current serving cell further decreases and/or the service frequency of the terminal device further decreases, the network device can configure the value of the prach-ConfigurationIndex field in the DCI transmitted to the terminal device to 4. If the value of the prach-ConfigurationIndex field in DCI is 4, according to the protocol, it is known that the terminal device transmits a preamble of format 0 in subframe 1 of system frames, where n*_{SFN}* mod8 = 1 (x=8, y=1. That is, system frames with n*_{SFN}* mod8 being equal to 1, 9, ...). Therefore, the random access configuration period determined according to the random access configuration index field in the downlink control information is 80 ms. Consequently, the random access configuration period of the terminal device changes from 40 ms to 80 ms. Therefore, FIG. 13 illustrates the change of the random access configuration period of the terminal device from 10 ms to 40 ms to 80 ms, according to the number of terminal devices in the current serving cell and/or the service frequency of the terminal device.

Through the technical solution of this embodiment, specifically by adjusting the current random access configuration period in real time through a newly added random access configuration index field in the downlink control information, the duration of the random access configuration period is enabled to better meet the requirements of the number of terminal devices in the serving cell and/or the service frequency of the terminal device, and the flexibility of configuring the random access configuration period is improved.

### Seventh Embodiment

Based on any one of the above embodiments of the present application, this embodiment further discloses a method for determining a first random access configuration based on radio resource control information, determining a second random access configuration for a first scenario and/or a second scenario according to the first random access configuration and a random access configuration index field in downlink control information, and determining a random access occasion according to the second random access configuration.

Optionally, the first scenario is within an inactive time of cell discontinuous reception.

Optionally, the second scenario is within an active time of cell discontinuous reception.

Optionally, determining the first random access configuration based on the radio resource control information includes: determining a random access configuration period, a preamble format, etc., based on the random access configuration index (prach-ConfigurationIndex) field in the radio resource control information.

Optionally, determining the second random access configuration for the first scenario and/or the second scenario according to the random access configuration index field in the downlink control information includes: determining a random access configuration period, a preamble format, etc., within the active time of cell DRX and/or the inactive time of cell DRX according to the random access configuration index field in the downlink control information.

Optionally, under the first trigger event and within the inactive time of cell DRX, the terminal device sends msg1 and/or msgA at the random access occasion of the second random access configuration determined by the random access configuration index field in the downlink control information.

Optionally, a preamble format determined by the second random access configuration is the same as a preamble format determined by the first random access configuration. A period of the random access occasion determined by the second random access configuration is a preset multiple of a period of the random access occasion determined by the first random access configuration. The number of synchronization signal blocks associated with the random access occasion determined by the second random access configuration is the same as the number of synchronization signal blocks associated with the random access occasion determined by the first random access configuration.

Optionally, a duration of the random access configuration period determined according to the random access configuration index field in the downlink control information is related to the number of terminal devices in the current serving cell and/or the service frequency of the terminal device.

Optionally, when the serving cell where the terminal device is located supports cell DRX configuration, the terminal device may, within the active time of cell DRX and/or the inactive time of cell DRX, determine the second random access configuration according to the random access configuration index field in the downlink control information, and determine the random access occasion according to the second random access configuration.

Optionally, when the serving cell where the terminal device is located supports cell DRX configuration, the terminal device may, only within the inactive time of cell DRX, determine the second random access configuration according to the random access configuration index field in the downlink control information, and determine the random access occasion according to the second random access configuration. While within the active time of cell DRX, the terminal device determines the first random access configuration according to the random access configuration index field in the radio resource control information, and determines the random access occasion according to the first random access configuration.

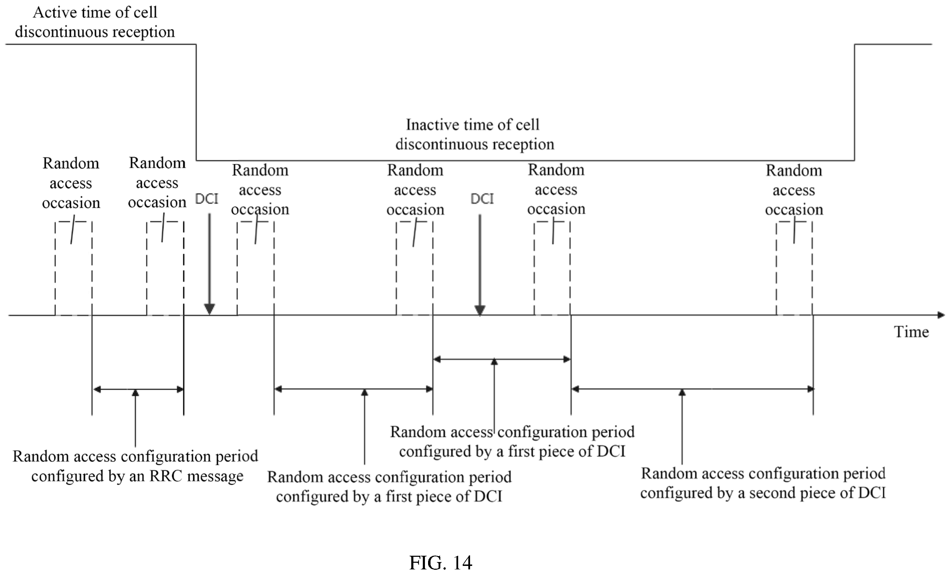

Referring to FIG. 14, which is a schematic diagram of a first example according to the seventh embodiment. As shown in FIG. 14, within the inactive time of cell DRX, the second random access configuration is determined according to the random access configuration index field in the downlink control information, and the random access occasions are determined according to the second random access configuration. While within the active time of cell DRX, the first random access configuration is determined according to the random access configuration index field in the radio resource control information configuration, and the random access occasions are determined according to the first random access configuration.

Through the technical solution of this embodiment, specifically by adjusting the random access configuration period in the first scenario and/or the second scenario in real time through a newly added random access configuration index field in the downlink control information, the sleep duration of the network device can be further increased, thereby reducing network energy consumption. And/or, by flexibly adjusting the random access configuration period through the downlink control information, the random access configuration period can be adaptively adjusted better according to the number of terminal devices in the current serving cell and/or the service frequency of the terminal device, thereby reducing the random access delay of the terminal device.

### Eighth Embodiment

Based on any one of the above embodiments of the present application, this embodiment further discloses a method for determining a random access occasion based on radio resource control information and/or medium access control information.

Optionally, the method for determining the random access occasion based on the radio resource control information and/or the medium access control information includes at least one of the following:
determining a first random access configuration based on the radio resource control information, and enabling or disabling all random access occasions within a random access configuration period or a random access association period in the first random access configuration according to a random access request field in the medium access control information;
determining a first random access configuration based on the radio resource control information, and enabling or disabling all random access occasions within a random access configuration period or a random access association period in the first random access configuration for a first scenario and/or a second scenario according to a random access request field in the medium access control information;
determining a first random access configuration based on the radio resource control information, determining a second random access configuration according to the first random access configuration and a random access configuration index field in the medium access control information, and determining the random access occasion according to the second random access configuration;
determining a first random access configuration based on the radio resource control information, determining a second random access configuration for a first scenario and/or a second scenario according to the first random access configuration and a random access configuration index field in the medium access control information, and determining the random access occasion according to the second random access configuration.

Optionally, the random access request field in the medium access control information is used to enable or disable all random access occasions within the current random access configuration period where the medium access control information is located. For example, assuming that there are a total of 32 random access occasions within the current random access configuration period, and assuming that the value of the random access request field in the medium access control information is 1, then, all 32 random access occasions within the current random access configuration period where the medium access control information is located are enabled.

Optionally, the random access request field in the medium access control information is used to enable or disable all random access occasions within the random access association period. For example, the number of random access configuration periods required to complete one full SSB mapping is 2, that is, the random access association period is two random access configuration periods. Assuming that the medium access control information enabling all random access occasions within the random access association period is located in the first random access configuration period within the random access association period, the number of random access occasions required to complete one full SSB mapping within the random access association period is 32, and the value of the random access request field in the medium access control information is 1, then, the 32 random access occasions within the random access association period are enabled.

Optionally, one random access occasion may be associated with one or more SSBs.

Optionally, the random access configuration period is determined by the random access configuration index field in the radio resource control information.

Optionally, enabling or disabling all random access occasions within the random access configuration period or the random access association period in the first random access configuration according to the random access request field in the medium access control information, may only be applicable to a terminal device in a serving cell supporting network energy saving.

Optionally, enabling or disabling all random access occasions within the random access configuration period or the random access association period in the first random access configuration according to the random access request field in the medium access control information includes: enabling or disabling all random access occasions within the current random access configuration period where the medium access control information is located according to the random access request field in the medium access control information.

Optionally, under the first trigger event, the terminal device sends msg1 and/or msgA at the random access occasion within the random access configuration period enabled by the random access request field in the medium access control information.

Optionally, for the first trigger event, reference may be made to the aforementioned third embodiment, which will not be repeated in this embodiment.

Optionally, the first scenario is within an inactive time of cell discontinuous reception.

Optionally, the second scenario is within an active time of cell discontinuous reception.

Optionally, when the serving cell where the terminal device is located supports cell DRX configuration, all random access occasions within the random access configuration period or the random access association period in the first random access configuration may be enabled or disabled according to the random access request field in the medium access control information, within the active time of cell DRX and/or the inactive time of cell DRX.

Optionally, within the inactive time of cell DRX, all random access occasions within the random access configuration period or the random access association period in the first random access configuration are enabled or disabled according to the random access request field in the medium access control information. While within the active time of cell DRX, all random access occasions within the random access configuration period or the random access association period in the first random access configuration configured according to the radio resource control information are enabled by default.

Optionally, one random access occasion may be associated with one or more SSBs.

Optionally, enabling or disabling all random access occasions within the random access configuration period or the random access association period in the first random access configuration for the first scenario and/or the second scenario according to the random access request field in the medium access control information includes: enabling or disabling all random access occasions within the current random access configuration period where the medium access control information is located within the inactive time of the cell DRX according to the random access request field in the medium access control information.

Optionally, under the first trigger event, within the inactive time of cell DRX, the terminal device sends msg1 and/or msgA at the random access occasion within the random access configuration period enabled by the random access request field in the medium access control information.

Optionally, enabling or disabling all random access occasions within the random access configuration period or the random access association period in the first random access configuration for the first scenario and/or the second scenario according to the random access request field in the medium access control information includes: enabling or disabling all random access occasions within the random access association period in the inactive time of cell DRX according to the random access request field in the medium access control information.

Optionally, determining the first random access configuration based on the radio resource control information includes: determining a random access configuration period, a preamble format, etc., based on the random access configuration index field in the radio resource control information.

Optionally, determining the second random access configuration according to the random access configuration index field in the medium access control information includes: determining a random access configuration period, a preamble format, etc., based on the random access configuration index field in the medium access control information.

Optionally, a preamble format determined by the second random access configuration is the same as a preamble format determined by the first random access configuration. A period of the random access occasion determined by the second random access configuration is a preset multiple of a period of the random access occasion determined by the first random access configuration. The number of synchronization signal blocks associated with the random access occasion determined by the second random access configuration is the same as the number of synchronization signal blocks associated with the random access occasion determined by the first random access configuration.

Optionally, a duration of the random access configuration period determined according to the random access configuration index field in the medium access control information is related to the number of terminal devices in the current serving cell and/or the service frequency of the terminal device.

Optionally, determining the second random access configuration for the first scenario and/or the second scenario according to the random access configuration index field in the medium access control information includes: determining the random access configuration period, the preamble format, etc., within the active time of cell DRX and/or the inactive time of cell DRX according to the random access configuration index field in the medium access control information.

Optionally, under the first trigger event and within the inactive time of cell DRX, the terminal device sends msg1 and/or msgA at the random access occasion of the second random access configuration determined by the random access configuration index field in the medium access control information.

Optionally, a preamble format determined by the second random access configuration is the same as a preamble format determined by the first random access configuration. A period of the random access occasion determined by the second random access configuration is a preset multiple of a period of the random access occasion determined by the first random access configuration. The number of synchronization signal blocks associated with the random access occasion determined by the second random access configuration is the same as the number of synchronization signal blocks associated with the random access occasion determined by the first random access configuration.

Optionally, when the serving cell where the terminal device is located supports cell DRX configuration, within the active time of cell DRX and/or the inactive time of cell DRX, it is possible to determine the second random access configuration according to the random access configuration index field in the medium access control information, and determine the random access occasion according to the second random access configuration.

Through the technical solution of this embodiment, specifically by enabling or disabling all random access occasions within the random access configuration period or the random access association period through a newly added random access request field in the medium access control information, and/or, by adjusting the random access configuration period in real time through a newly added random access configuration request field in the medium access control information, the flexibility of random access occasion configuration is improved. And/or, the duration of the random access configuration period is flexibly adjusted according to the number of terminal devices in the current serving cell and/or the service frequency of the terminal device, the number of blind detection attempts for preamble detection performed by the network device at the agreed random access occasions is reduced, thereby reducing the energy consumption of the network device.

### Ninth Embodiment

Based on any of the above embodiments of the present application, this embodiment further discloses applicable scenarios for the processing method in any one of the aforementioned embodiments.

Optionally, the random access occasion determined based on the downlink information may be used for contention-based random access and/or contention-free random access.

Optionally, determining the random access occasion based on the downlink information, where the random access occasion is an occasion at which the network device performs preamble detection, includes at least one of the following:
determining the random access occasion based on radio resource control information and/or downlink control information;
determining the random access occasion based on radio resource control information and/or medium access control information.

Optionally, determining the random access occasion based on the downlink information, where the random access occasion is an occasion at which the network device performs preamble detection, includes at least one of the following:
determining a first random access configuration based on the radio resource control information, and enabling or disabling all random access occasions within a random access configuration period or a random access association period in the first random access configuration according to a random access request field in the downlink control information;
determining a first random access configuration based on the radio resource control information, and enabling or disabling all random access occasions within a random access configuration period or a random access association period in the first random access configuration for a first scenario and/or a second scenario according to a random access request field in the downlink control information;
determining a first random access configuration based on the radio resource control information, determining a second random access configuration according to the first random access configuration and a random access configuration index field in the downlink control information, and determining the random access occasion according to the second random access configuration;
determining a first random access configuration based on the radio resource control information, determining a second random access configuration for a first scenario and/or a second scenario according to the first random access configuration and a random access configuration index field in the downlink control information, and determining the random access occasion according to the second random access configuration;
determining a first random access configuration based on the radio resource control information, and enabling or disabling all random access occasions within a random access configuration period or a random access association period in the first random access configuration according to a random access request field in the medium access control information;
determining a first random access configuration based on the radio resource control information, and enabling or disabling all random access occasions within a random access configuration period or a random access association period in the first random access configuration for a first scenario and/or a second scenario according to a random access request field in the medium access control information;
determining a first random access configuration based on the radio resource control information, determining a second random access configuration according to the first random access configuration and a random access configuration index field in the medium access control information, and determining the random access occasion according to the second random access configuration;
determining a first random access configuration based on the radio resource control information, determining a second random access configuration for a first scenario and/or a second scenario according to the first random access configuration and a random access configuration index field in the medium access control information, and determining the random access occasion according to the second random access configuration.

Optionally, the random access occasion is used for 2-step random access and/or 4-step random access.

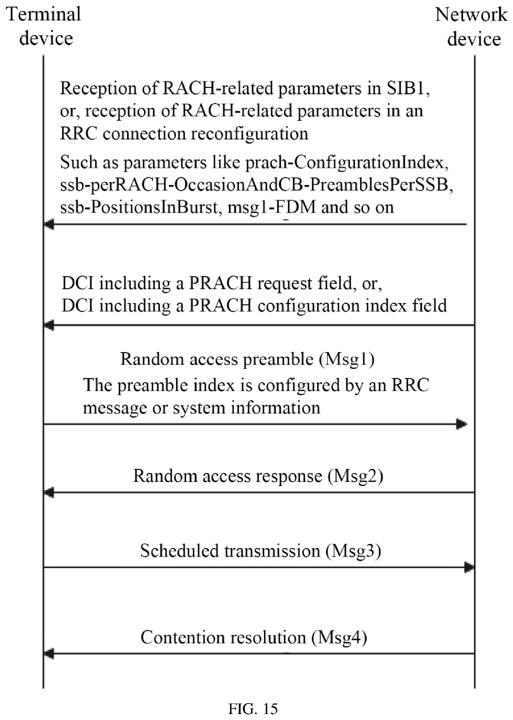

Referring to FIG. 15, which is a schematic diagram of a first example according to the ninth embodiment. As shown in FIG. 15, a solution for determining the random access occasion based on the downlink information can be applied to 4-step contention-based random access.

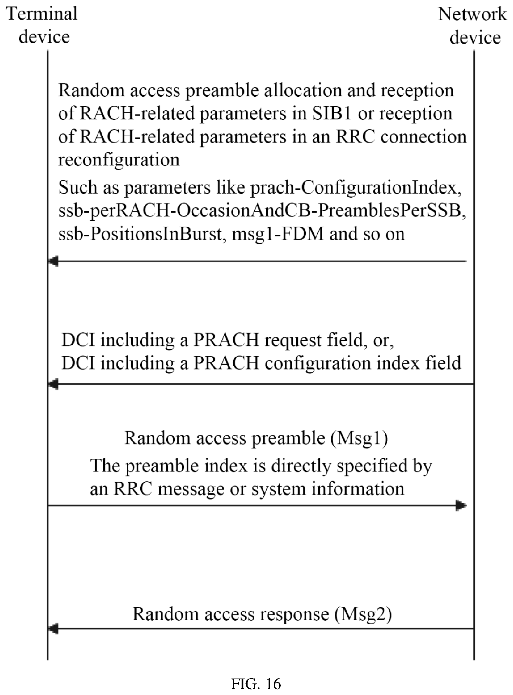

Referring to FIG. 16, which is a schematic diagram of a second example according to the ninth embodiment. As shown in FIG. 16, a solution for determining the random access occasion based on the downlink information can be applied to 4-step contention-free random access.

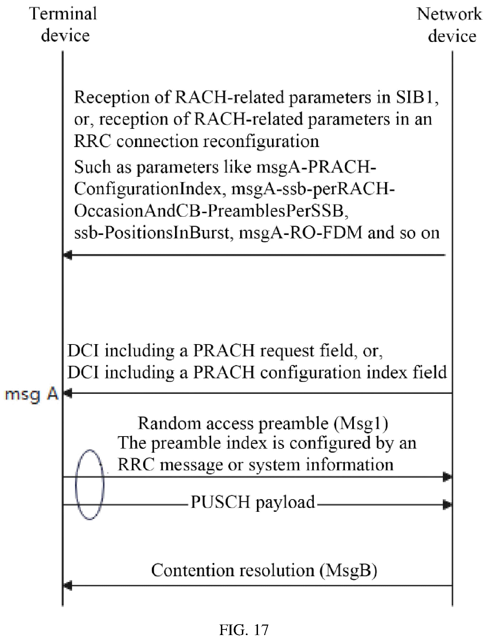

Referring to FIG. 17, which is a schematic diagram of a third example according to the ninth embodiment. As shown in FIG. 17, a solution for determining the random access occasion based on the downlink information can be applied to 2-step contention-based random access.

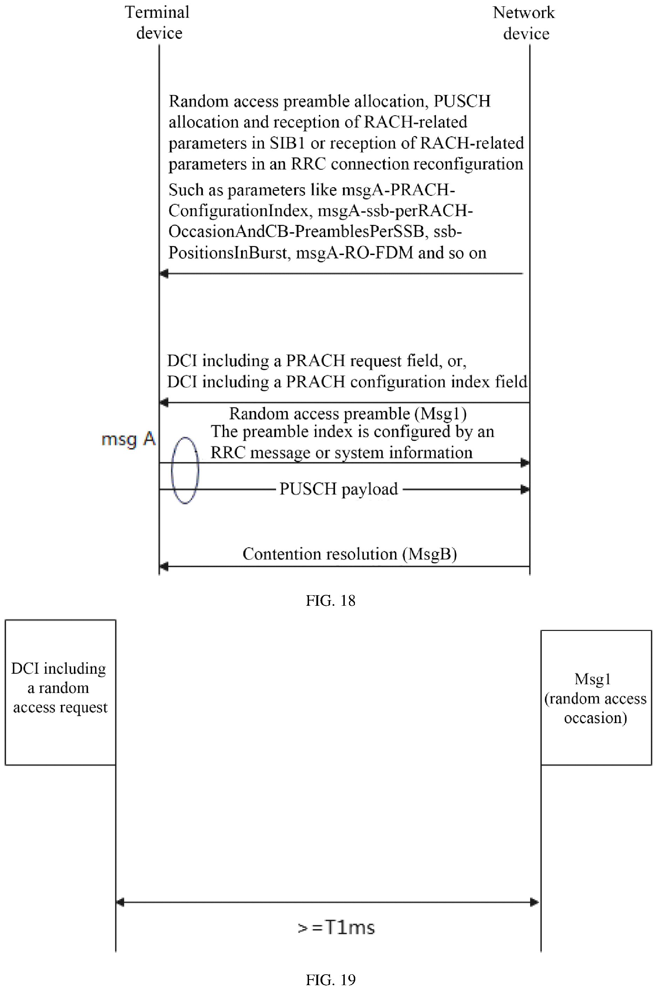

Referring to FIG. 18, which is a schematic diagram of a fourth example according to the ninth embodiment. As shown in FIG. 18, a solution for determining the random access occasion based on the downlink information can be applied to 2-step contention-free random access.

Through the solution of this embodiment, specifically by specifying that the random access occasion determined based on the downlink information is applicable to contention-based random access and/or contention-free random access, as well as 2-step random access and/or 4-step random access, the applicability of the random access occasion determined based on the downlink information is improved.

### Tenth Embodiment

Based on any one of the above embodiments of the present application, this embodiment further discloses specific limitations of the downlink control information in any one of the aforementioned embodiments.

Optionally, the downlink control information includes at least one of the following:
being transmitted in a common search space;
a random access request field;
a random access configuration index field;
a no system information transmission field;
an indication field for cell discontinuous transmission and/or cell discontinuous reception;
an SSB index field;
a preamble index field for random access;
a PRACH mask index field;
an RNTI (Radio Network Temporary Identifier, radio network temporary identifier) value distinct from that for scheduling DCI (for example, DCI format 0_0/DCI format 0_1 for uplink scheduling, DCI format 1_0/DCI format 1_1/DCI format 1_2 for downlink scheduling, etc.).

Optionally, the number of bits of the random access request field in the downlink control information may be 1. When the value of the random access request field is 1, all random access occasions within the random access configuration period where the downlink control information is located or all random access occasions within the random access association period to which the random access configuration period belongs are enabled.

Optionally, the number of bits of the random access configuration index field in the downlink control information may be 8. The value of the random access configuration index field corresponds to the values in the first column of Table 6.3.3.2-2, Table 6.3.3.2-3, and Table 6.3.3.2-4 in TS 38.211. For example, for FR1 and FDD, if prach-ConfigurationIndex takes a value of 9, then, according to the value of prach-ConfigurationIndex and Table 6.3.3.2-2, it is known that the random access configuration period is 40 ms.

Optionally, the number of bits of the indication field for cell discontinuous transmission and/or cell discontinuous reception in the downlink control information may be 2. The high bit is used to indicate whether the cell discontinuous transmission configuration is activated, and the low bit is used to indicate whether the cell discontinuous reception configuration is activated.

Optionally, the number of bits of the no system information transmission field in the downlink control information may be 1, and the no system information transmission field is used to indicate whether SIB1 is transmitted in the current SIB1 repetition period.

Optionally, the preamble index field is used to specify a preamble index used by a terminal for random access, and the number of bits may be 6 bits.

Optionally, the SSB index field is used to specify a SSB index used by a terminal for random access, and the number of bits may be 6 bits.

Optionally, the PRACH mask index field is used to specify that the terminal uses the random access occasion associated with the SSB indicated by the SSB index field for PRACH transmission. It is mainly used in a scenario where one SSB is associated with a plurality of random access occasions.

Optionally, a time interval, between a slot where a physical downlink control channel carrying downlink control information is located and a slot where a start symbol of the random access occasion is located, is greater than a first threshold.

Optionally, the first threshold is related to the capability of the terminal device. Optionally, a time interval between a last symbol of the physical downlink control channel carrying the downlink control information and a first symbol of the random access channel transmission is greater than or equal to *N_{T,2}*+ △_{BWPSwitching}+△_{Delay}+*T_{Switch}* milliseconds. Optionally, *N_{T,2}* is a duration of *N₂* symbols corresponding to PUSCH preparation time for UE capability 1, where *µ* corresponds to a minimum SCS configuration between an SCS configuration of the PDCCH and an SCS configuration of the corresponding PRACH transmission. When 1.25 kHz or 5 kHz SCS is used in the PRACH transmission, *µ*=0 is assumed for a calculation of *N₂*. If the activated UL BWP (Bandwidth Part, bandwidth part) remains unchanged, △ _{BWPSwitching} = 0 and the definition of △_{BWPSwitching} refers to TS 38.133. For FR1, △_{Delay} = 0.5 msec. For FR2, △_{Delay} = msec. *T_{Switch}* is a switching duration defined in TS 38.214.

Referring to FIG. 19, which is a schematic diagram of a first example according to the tenth embodiment. As shown in FIG. 19, this embodiment is illustrated by taking T1 = *N_{T,2}*+△_{BWPSwitching}+△ _{Delay}+*T_{Switch}* as an example.

Through the solution of this embodiment, specifically by constraining a time interval between the PDCCH where the downlink control information is located and the random access occasion, it helps to reserve sufficient bandwidth switching time and uplink transmission preparation time for the terminal device according to the capability of the terminal device, thereby ensuring the rationality of the random access transmission performed by the terminal device.

### Eleventh Embodiment

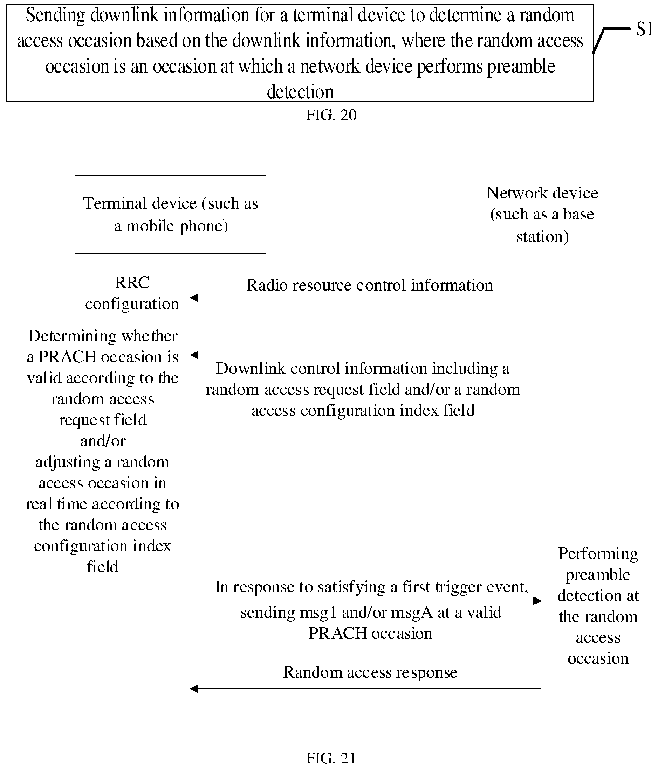

Referring to FIG. 20, which is a schematic flowchart of a processing method according to the eleventh embodiment. The method of this embodiment can be applied to a network device (such as a base station), including the step of:
S1, sending downlink information for a terminal device to determine a random access occasion based on the downlink information, where the random access occasion is an occasion at which a network device performs preamble detection.

Optionally, the downlink information includes at least one of radio resource control information, downlink control information, or medium access control information.

Optionally, the downlink control information includes at least one of the following:
a random access request field;
a random access configuration index field;
a no system information transmission field;
an indication field for cell discontinuous transmission and/or cell discontinuous reception.

Optionally, the network device sends downlink control information and/or radio resource control information including the random access request field to the terminal device, and the terminal device enables or disables all random access occasions within a random access configuration period or a random access association period according to the received downlink control information and/or radio resource control information; and/or, the terminal device enables or disables random access occasions within a random access configuration period or a random access association period in a first scenario and/or a second scenario according to the received downlink control information and/or radio resource control information.

Optionally, the network device sends downlink control information and/or radio resource control information including the random access configuration index field to the terminal device, the terminal device determines a second random access configuration according to the received downlink control information and/or radio resource control information, and determines the random access occasion according to the second random access configuration; and/or, the terminal device determines a second random access configuration for a first scenario and/or a second scenario according to the received downlink control information and/or radio resource control information, and determines the random access occasion according to the second random access configuration.

Optionally, the network device sends medium access control information and/or radio resource control information including the random access request field to the terminal device, and the terminal device enables or disables all random access occasions within a random access configuration period or a random access association period according to the received medium access control information and/or radio resource control information; and/or, the terminal device enables or disables random access occasions within a random access configuration period or a random access association period in a first scenario and/or a second scenario according to the received medium access control information and/or radio resource control information.

Optionally, the network device sends medium access control information and/or radio resource control information including the random access configuration index field to the terminal device, the terminal device determines a second random access configuration according to the received medium access control information and/or radio resource control information, and determines the random access occasion according to the second random access configuration; and/or, the terminal device determines a second random access configuration for a first scenario and/or a second scenario according to the received medium access control information and/or radio resource control information, and determines the random access occasion according to the second random access configuration.

Optionally, the first scenario is within an inactive time of cell discontinuous reception.

Optionally, the second scenario is within an active time of cell discontinuous reception.

Optionally, the random access occasion is a valid random access occasion based on the downlink control information. Optionally, assuming that the number of bits of the random access request field in the downlink control information is 1, and a bit of 0 indicates that the current random access configuration period or random access association period is not enabled, and a bit of 1 indicates that the current random access configuration period or random access association period is enabled. Valid random access occasions are all random access occasions within the current random access configuration period or random access association period indicated as enabled by the random access request field.

Optionally, the random access occasion is a valid random access occasion based on the second random access configuration. Optionally, the valid random access occasions are all random access occasions within the random access configuration period or random access association period determined based on the second random access configuration.

Optionally, the terminal device determines a first random access configuration based on the radio resource control information, determines a second random access configuration according to the first random access configuration and the random access configuration index field in the downlink control information, and determines the random access occasion according to the second random access configuration.

Optionally, the terminal device determines a first random access configuration based on the radio resource control information, determines a second random access configuration for a first scenario and/or a second scenario according to the first random access configuration and the random access configuration index field in the downlink control information, and determines the random access occasion according to the second random access configuration.

Optionally, determining the second random access configuration according to the first random access configuration and the random access configuration index field in the downlink control information includes at least one of the following:
optionally, a preamble format determined by the second random access configuration being the same as a preamble format determined by the first random access configuration;
optionally, a period of the random access occasion determined by the second random access configuration being a preset multiple of a period of the random access occasion determined by the first random access configuration;
optionally, the number of synchronization signal blocks associated with the random access occasion determined by the second random access configuration being the same as the number of synchronization signal blocks associated with the random access occasion determined by the first random access configuration.

Optionally, the period of the random access occasion determined by the second random access configuration may be 2^N times the period of the random access occasion determined by the first random access configuration. Optionally, N is equal to {-4, -3, -2, -1, 0, 1, 2, 3, 4}.

Optionally, at least one of a period, a time domain position, and a frequency domain position of the random access occasion is determined by radio resource control information and/or downlink control information.

Optionally, at least one of a period of the random access occasion, a radio frame in the time domain in which the random access occasion is located, a slot and/or a symbol position in the time domain in which the random access occasion is located, and a frequency domain resource block index is determined by radio resource control information and/or downlink control information.

Optionally, a time interval, between a slot where a physical downlink control channel carrying downlink control information is located and a slot where a start symbol of the random access occasion is located, is greater than a first threshold.

Optionally, the first threshold is related to the capability of the terminal device. Optionally, a time interval between a last symbol of the physical downlink control channel carrying the downlink control information and a first symbol of the random access channel transmission is greater than or equal to *N_{T,2}*+ △_{BWPSwitching}+△_{Delay}+*T_{Switch}* milliseconds. Optionally, *N_{T,2}* is duration of *N₂* symbols corresponding to PUSCH preparation time for UE capability 1, where *µ* corresponds to a minimum SCS configuration between an SCS configuration of the PDCCH and an SCS configuration of the corresponding PRACH transmission. When 1.25 kHz or 5 kHz SCS is used in the PRACH transmission, *µ*=0 is assumed for a calculation of *N₂*. If the activated UL BWP (Bandwidth Part, bandwidth part) remains unchanged, △ _{BWPSwitching} = 0 and the definition of △_{BWPSwitching} refers to TS 38.133. For FR1, △_{Delay} = 0.5 msec. For FR2, △_{Delay} = 0.25 msec. *T_{Switch}* is a switching duration defined in TS 38.214.

Optionally, the random access occasion determined based on the downlink information may be used for contention-based random access and/or contention-free random access.

Optionally, the random access occasion determined based on the downlink information may be used for 2-step random access and/or 4-step random access.

Through the solution of this embodiment, specifically by sending downlink information for a terminal device to determine a random access occasion based on the downlink information, where the random access occasion is an occasion at which a network device performs preamble detection, the network device is enabled to perform preamble detection only at the random access occasion indicated as valid by the downlink information, thereby reducing unnecessary signaling interactions, saving resources, and/or reducing energy consumption.

### Twelfth Embodiment

Referring to FIG. 21, which is a schematic diagram of an interaction sequence according to the twelfth embodiment.

In this embodiment, a network device (such as a base station) sends downlink information to a terminal device (such as a mobile phone) to enable the terminal device to determine a random access occasion based on the downlink information, where the random access occasion is an occasion at which the network device performs preamble detection.

Optionally, the network device sends radio resource control information to the terminal device to enable the terminal device to determine a first random access configuration based on the radio resource control message.

Optionally, the network device sends the downlink control information to the terminal device to enable the terminal device to enable or disable a random access configuration period or a random access association period in the first random access configuration, and further to enable the terminal device to send msg1 and/or msgA at the random access occasion within the enabled random access configuration period or random access association period under a first trigger event.

Optionally, the network device sends the downlink control information to the terminal device to enable the terminal device to adjust a period of random access channel transmission in real time according to the downlink control information, and further to enable the terminal device to quickly achieve sending of msg1 and/or msgA under the first trigger event.

Optionally, the network device sends downlink control information and/or radio resource control information including the random access request field to the terminal device, and the terminal device enables or disables all random access occasions within a random access configuration period or a random access association period according to the received downlink control information and/or radio resource control information; and/or, the terminal device enables or disables random access occasions within a random access configuration period or a random access association period in a first scenario and/or a second scenario according to the received downlink control information and/or radio resource control information.

Optionally, the network device sends downlink control information and/or radio resource control information including the random access configuration index field to the terminal device, the terminal device determines a second random access configuration according to the received downlink control information and/or radio resource control information, and determines the random access occasion according to the second random access configuration; and/or, the terminal device determines a second random access configuration for a first scenario and/or a second scenario according to the received downlink control information and/or radio resource control information, and determines the random access occasion according to the second random access configuration.

Optionally, the network device sends medium access control information and/or radio resource control information including the random access request field to the terminal device, and the terminal device enables or disables all random access occasions within a random access configuration period or a random access association period according to the received medium access control information and/or radio resource control information; and/or, the terminal device enables or disables random access occasions within a random access configuration period or a random access association period in a first scenario and/or a second scenario according to the received medium access control information and/or radio resource control information.

Optionally, the network device sends medium access control information and/or radio resource control information including the random access configuration index field to the terminal device, the terminal device determines a second random access configuration according to the received medium access control information and/or radio resource control information, and determines the random access occasion according to the second random access configuration; and/or, the terminal device determines a second random access configuration for a first scenario and/or a second scenario according to the received medium access control information and/or radio resource control information, and determines the random access occasion according to the second random access configuration.

Optionally, the first scenario is within an inactive time of cell discontinuous reception.

Optionally, the second scenario is within an active time of cell discontinuous reception.

Optionally, if initial access is initiated from an RRC_IDLE state, the terminal device sends msg1 and/or msgA including a preamble at the random access occasion determined based on the downlink information.

Optionally, if during an RRC connection re-establishment procedure, the terminal device sends msg1 and/or msgA including a preamble at the random access occasion determined based on the downlink information.

Optionally, if uplink or downlink data arrives during an RRC connected state, but the uplink synchronization status is out-of-sync at this time, the terminal device sends msg1 and/or msgA including a preamble at the random access occasion determined based on the downlink information.

Optionally, if SDT transmission is required during an RRC inactive state, but the uplink synchronization status is out-of-sync at this time, the terminal device sends msg1 and/or msgA including a preamble at the random access occasion determined based on the downlink information.

Optionally, if uplink data arrives during an RRC connected state, but no PUCCH resource is available for an SR, the terminal device sends msg1 and/or msgA including a preamble at the random access occasion determined based on the downlink information.

Optionally, if SDT transmission is required during an RRC inactive state, but no PUCCH resource is available for an SR, the terminal device sends msg1 and/or msgA including a preamble at the random access occasion determined based on the downlink information.

Optionally, if the SR fails, the terminal device sends msg1 and/or msgA including a preamble at the random access occasion determined based on the downlink information.

Optionally, if an access request is initiated by RRC during synchronization reconfiguration (such as handover), the terminal device sends msg1 and/or msgA including a preamble at the random access occasion determined based on the downlink information.

Optionally, if transitioning from the RRC_INACTIVE state to another state, the terminal device sends msg1 and/or msgA including a preamble at the random access occasion determined based on the downlink information.

Optionally, if requesting other system information, the terminal device sends msg1 and/or msgA including a preamble at the random access occasion determined based on the downlink information.

Optionally, if establishing time alignment for a secondary TAG, the terminal device sends msg1 and/or msgA including a preamble at the random access occasion determined based on the downlink information.

Optionally, if beam failure recovery takes place, the terminal device sends msg1 and/or msgA including a preamble at the random access occasion determined based on the downlink information.

Optionally, if consistent UL LBT fails on a SpCell, the terminal device sends msg1 and/or msgA including a preamble at the random access occasion determined based on the downlink information.

Optionally, if SDT transmission is required during RRC_INACTIVE, the terminal device sends msg1 and/or msgA including a preamble at the random access occasion determined based on the downlink information.

Optionally, if a timing advance is needed for a random access procedure for positioning during RRC_CONNECTED (for example, when a timing advance is needed for UE positioning), the terminal device sends msg1 and/or msgA including a preamble at the random access occasion determined based on the downlink information.

Optionally, the network device performs preamble detection at the random access occasion, generates a random access response according to the detected preamble, and sends the random access response to the terminal device.

Through the solution of this embodiment, specifically by sending downlink information to the terminal device by a network device, the terminal device is enabled to determine the random access occasion based on the downlink information, where the random access occasion is an occasion at which the network device performs preamble detection, then the number of random access occasion detections by the network device can be reduced. In addition, the network device may directly adjust the position of the valid random access occasion through the downlink information, thereby reducing unnecessary signaling interactions, saving resources, and/or reducing energy consumption.

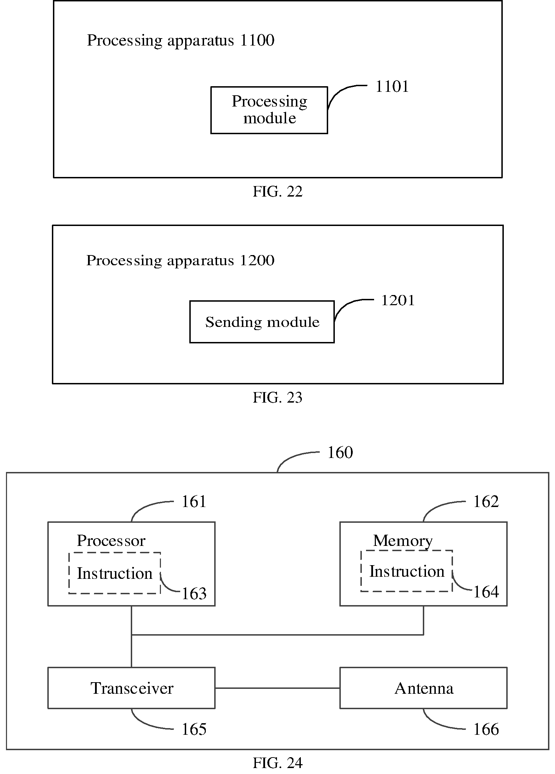

Please refer to FIG. 22, which is a first structural schematic diagram of a processing apparatus provided by an embodiment of the present application. The apparatus can be mounted in or be the terminal device in the above method embodiments. The processing apparatus shown in FIG. 22 can be configured to execute some or all of the functions in the method embodiments described in the above embodiments. As shown in FIG. 22, the processing apparatus 1100 includes:
a processing module 1101, configured to determine a random access occasion based on downlink information, where the random access occasion is an occasion at which a network device performs preamble detection.

Optionally, the downlink information includes at least one of radio resource control information, downlink control information, or medium access control information.

Optionally, the processing apparatus further includes at least one of the following:
at least one of a period, a time domain position, and a frequency domain position of the random access occasion being determined by radio resource control information and/or downlink control information;
a time interval, between a slot where a physical downlink control channel carrying downlink control information is located and a slot where a start symbol of the random access occasion is located, being greater than a first threshold;
the random access occasion being used for contention-based random access and/or contention-free random access;
the random access occasion being used for 2-step random access and/or 4-step random access;
the downlink control information includes at least one of the following:
   a random access request field;
   a random access configuration index field;
   a no system information transmission field;
   an indication field for cell discontinuous transmission and/or cell discontinuous reception.

Optionally, the determining the random access occasion based on the downlink information, where the random access occasion is the occasion for the network device to perform preamble detection, includes at least one of the following:
determining the random access occasion based on radio resource control information and/or downlink control information;
determining the random access occasion based on radio resource control information and/or medium access control information.

Optionally, the determining the random access occasion based on the downlink information, where the random access occasion is the occasion for the network device to perform preamble detection, includes at least one of the following:
determining a first random access configuration based on the radio resource control information, and enabling or disabling all random access occasions within a random access configuration period or a random access association period in the first random access configuration according to a random access request field in the downlink control information;
determining a first random access configuration based on the radio resource control information, and enabling or disabling all random access occasions within a random access configuration period or a random access association period in the first random access configuration for a first scenario and/or a second scenario according to a random access request field in the downlink control information;
determining a first random access configuration based on the radio resource control information, determining a second random access configuration according to the first random access configuration and a random access configuration index field in the downlink control information, and determining the random access occasion according to the second random access configuration;
determining a first random access configuration based on the radio resource control information, determining a second random access configuration for a first scenario and/or a second scenario according to the first random access configuration and a random access configuration index field in the downlink control information, and determining the random access occasion according to the second random access configuration.

Optionally, the processing apparatus further includes at least one of the following:
the random access occasion being a valid random access occasion based on the downlink control information;
the random access occasion being a valid random access occasion based on the second random access configuration;
the first scenario being within an inactive time of cell discontinuous reception;
the second scenario being within an active time of cell discontinuous reception;
a preamble format determined by the second random access configuration being the same as a preamble format determined by the first random access configuration;
a period of a random access occasion determined by the second random access configuration being a preset multiple of a period of a random access occasion determined by the first random access configuration;
the number of synchronization signal blocks associated with a random access occasion determined by the second random access configuration being the same as the number of synchronization signal blocks associated with a random access occasion determined by the first random access configuration.

Optionally, the processing apparatus further includes:
in response to satisfying a first trigger event, sending msg1 and/or msgA including a preamble at the random access occasion.

Optionally, satisfying the first trigger event includes at least one of the following:
initiating initial access from a radio resource control idle state;
a radio resource control connection re-establishment procedure;
uplink data arrival during a radio resource control connected state, and no physical uplink control channel resources available for a scheduling request;
a scheduling request failure;
initiating an access request by radio resource control during synchronization reconfiguration;
transitioning from a radio resource control inactive state to another state;
requesting other system information.

The processing apparatus provided in the embodiments of the present application can execute the technical solutions shown in the corresponding method embodiments described above, and its implementation principles and beneficial effects are similar, which will not be repeated here.

Please refer to FIG. 23, which is a second structural schematic diagram of a processing apparatus provided by an embodiment of the present application. The apparatus can be mounted in or be the network device in the above method embodiments. As shown in FIG. 23, the processing apparatus 1200 includes:
a sending module 1201, configured to send downlink information for a terminal device to determine a random access occasion based on the downlink information, where the random access occasion is an occasion at which a network device performs preamble detection.

Optionally, the downlink information includes at least one of radio resource control information, physical downlink control information, or medium access control information.

Optionally, the processing apparatus further includes at least one of the following:
at least one of a period, a time domain position, and a frequency domain position of the random access occasion being determined by radio resource control information and/or downlink control information;
a time interval, between a slot where a physical downlink control channel carrying downlink control information is located and a slot where a start symbol of the random access occasion is located, being greater than a first threshold;
the random access occasion being used for contention-based random access and/or contention-free random access;
the random access occasion being used for 2-step random access and/or 4-step random access;
the downlink control information includes at least one of the following:
   a random access request field;
   a random access configuration index field;
   a no system information transmission field;
   an indication field for cell discontinuous transmission and/or cell discontinuous reception.

Optionally, the step in which the terminal device determines the random access occasion based on the downlink information includes at least one of the following:
the terminal device determines the random access occasion based on radio resource control information and/or downlink control information;
the terminal device determines the random access occasion based on radio resource control information and/or medium access control information.

Optionally, the step in which the terminal device determines the random access occasion based on the downlink information includes at least one of the following:
the terminal device determines a first random access configuration based on the radio resource control information, and enables or disables all random access occasions within a random access configuration period or a random access association period in the first random access configuration according to a random access request field in the downlink control information;
the terminal device determines a first random access configuration based on the radio resource control information, and enables or disables all random access occasions within a random access configuration period or a random access association period in the first random access configuration for a first scenario and/or a second scenario according to a random access request field in the downlink control information;
the terminal device determines a first random access configuration based on the radio resource control information, determines a second random access configuration according to the first random access configuration and a random access configuration index field in the downlink control information, and determines the random access occasion according to the second random access configuration;
the terminal device determines a first random access configuration based on the radio resource control information, determines a second random access configuration for a first scenario and/or a second scenario according to the first random access configuration and a random access configuration index field in the downlink control information, and determines the random access occasion according to the second random access configuration.

Optionally, the processing apparatus further includes at least one of the following:
the random access occasion being a valid random access occasion based on the downlink control information;
the random access occasion being a valid random access occasion based on the second random access configuration;
the first scenario being within an inactive time of cell discontinuous reception;
the second scenario being within an active time of cell discontinuous reception;
a preamble format determined by the second random access configuration being the same as a preamble format determined by the first random access configuration;
a period of a random access occasion determined by the second random access configuration being a preset multiple of a period of a random access occasion determined by the first random access configuration;
the number of synchronization signal blocks associated with a random access occasion determined by the second random access configuration being the same as the number of synchronization signal blocks associated with a random access occasion determined by the first random access configuration.

The processing apparatus provided in the embodiments of the present application can execute the technical solutions shown in the corresponding method embodiments described above, and its implementation principles and beneficial effects are similar, which will not be repeated here.

Referring to FIG. 24, which is a structural schematic diagram of a communication device provided by an embodiment of the present application. As shown in FIG. 24, the communication device 160 described in this embodiment may be the terminal device (or a component used in the terminal device) or the network device (or a component used in the network device) mentioned in the previous method embodiments. The communication device 160 can be used to implement the methods corresponding to the terminal device or network device described in the above method embodiments, and details can be seen in the description in the above method embodiments.

The communication device 160 may include one or more processors 161, which may also be referred to as a processing unit, which is capable of implementing certain control or processing functions. The processor 161 may be a general-purpose processor or a dedicated processor, etc. For example, it may be a baseband processor or a central processing unit. The baseband processor may be used to process communication protocols and communication data. The central processing unit may be used to control the communication device, execute software programs, and process data in the software programs.

Optionally, the processor 161 may also store an instruction 163 or data (for example, intermediate data). Optionally, the instruction 163 may be executed by the processor 161, enabling the communication device 160 to perform the methods corresponding to the terminal device or network device described in the aforementioned method embodiments.

Optionally, the communication device 160 may include a circuit that can implement the functions of transmitting, receiving, or communicating described in the aforementioned method embodiments.

Optionally, the communication device 160 may include one or more memories 162, which the instruction 164 may be stored on. The instruction may be executed on the processor 161, enabling the communication device 160 to perform the methods described in the aforementioned method embodiments.

Optionally, data may also be stored in the memory 162. The processor 161 and the memory 162 may be set separately or integrated together.

Optionally, the communication device 160 may further include a transceiver 165 and/or an antenna 166. The processor 161 may be referred to as a processing unit, controlling the communication device 160 (a terminal device, a core network device, or a wireless access network device). The transceiver 165 may be referred to as a transceiver unit, a transceiver, a transceiver circuit, or the like, used to implement the transceiver function of the communication device 160.

Optionally, if the communication device 160 is used to implement the operations corresponding to the terminal device in the above embodiments, for example, the transceiver 165 may receive downlink information, and the processor 161 may determine a random access occasion based on the downlink information, where the random access occasion is an occasion at which a network device performs preamble detection.

Optionally, for the specific implementation process of the processor 161 and the transceiver 165, reference may be made to in the relevant descriptions of the above embodiments and will not be repeated here.

Optionally, if the communication device 160 is used to implement the operations corresponding to the network device in the above embodiments, for example, the transceiver 165 may send downlink information to enable a terminal device to determine a random access occasion based on the downlink information, where the random access occasion is an occasion at which a network device performs preamble detection.

Optionally, for the specific implementation process of the processor 161 and the transceiver 165, reference may be made to in the relevant descriptions of the above embodiments and will not be repeated here.

The processor 161 and transceiver 165 described in this application can be implemented on an IC (Integrated Circuit, Integrated Circuit), analog integrated circuit, RFIC (Radio Frequency Integrated Circuit, Radio Frequency Integrated Circuit), mixed-signal integrated circuit, ASIC (Application Specific Integrated Circuit, Application Specific Integrated Circuit), PCB (Printed Circuit Board, Printed Circuit Board), electronic device, etc. The processor 161 and transceiver 165 can also be manufactured using various IC process technologies, for example, a CMOS (Complementary Metal-Oxide Semiconductor, Complementary Metal-Oxide Semiconductor), an NMOS (N Metal-Oxide Semiconductor, N Metal-Oxide Semiconductor), a PMOS (Positive channel Metal Oxide Semiconductor, Positive channel Metal Oxide Semiconductor), a BJT (Bipolar Junction Transistor, Bipolar Junction Transistor), an Bipolar CMOS (BiCMOS), Silicon Germanium (SiGe), Gallium Arsenide (GaAs), etc.

The communication device in the present application may be a terminal device (such as a mobile phone) or a network device (such as a base station). The specific reference should be clarified based on the context. The terminal device may be implemented in various forms. For example, the terminal device described in the present application may include a smart terminal device such as a mobile phone, a tablet computer, a laptop, a palmtop computer, a personal digital assistant (Personal Digital Assistant, PDA), a portable media player (Portable Media Player, PMP), a navigation apparatus, a wearable device, a smart bracelet, a pedometer, etc., as well as a fixed terminal device such as a digital TV, a desktop computer, etc.

Although in the descriptions of the above embodiments, the communication device is described as a terminal device or network device, the scope of the communication device described in this application is not limited to the above terminal device or network device, and the structure of the communication device may not be limited by FIG. 24. The communication device may be an independent device or may be part of a larger device.

An embodiment of the present application further provides a communication system, including: the terminal device according to any one of the aforementioned embodiments, and, the network device according to any one of the aforementioned embodiments.

An embodiment of the present application further provides a communication device, including a memory, a processor, and a processing program stored on the memory. When the processing program is executed by the processor, the steps of the processing method according to any one of the above embodiments are implemented.

The communication device in the present application may be a terminal device (such as a mobile phone) or a network device (such as a base station). The specific reference should be clarified based on the context.

An embodiment of the present application further provides a storage medium with a processing program stored thereon. When the processing program is executed by a processor, the steps of the processing method according to any one of the above embodiments are implemented.

In the embodiments of the communication device and storage medium provided by the present application, they may include all the technical features of any one of the aforementioned processing method embodiments. The description expansion and explanation content are basically the same as those of the various embodiments of the above method and will not be repeated here.

An embodiment of the present application further provides a computer program product which includes computer program code. When the computer program code is run on a computer, the computer is enabled to execute the method according to any one of the various possible implementations described above.

An embodiment of the present application further provides a chip, including a memory and a processor. The memory is used to store a computer program, and the processor is used to invoke and run the computer program in the memory, enabling a device on which the chip is installed to execute the method according to any one of the various possible implementations described above.

It is understood that the above scenarios are only examples and do not constitute limitations on the application scenarios of the technical solutions provided by the embodiments of the present application. The technical solutions of the present application can also be applied to other scenarios. For example, those skilled in the art can understand that with the evolution of system architecture and the emergence of new business scenarios, the technical solutions provided by the embodiments of the present application are equally applicable to similar technical problems. The sequence numbers of the above embodiments of the present application are for description only and do not represent the superiority or inferiority of the embodiments. The steps in the method embodiments of the present application can be adjusted in order, merged, and deleted according to actual requirements. The units in the device embodiments of the present application can be merged, divided, and deleted according to actual requirements. In the present application, for descriptions of identical or similar term concepts, technical solutions, and/or application scenarios, detailed descriptions are generally provided only upon first occurrence. When they appear again later, they are generally not repeated for brevity. When understanding the technical solutions and other content of this application, for identical or similar term concepts, technical solutions, and/or application scenario descriptions that are not described in detail later, reference can be made to their previous relevant detailed descriptions. In the present application, the descriptions of the various embodiments each have their own emphasis. For parts not described or recorded in detail in a certain embodiment, reference can be made to the relevant descriptions of other embodiments. The technical features of the technical solutions of the present application can be combined arbitrarily. To keep the description concise, not all possible combinations of the various technical features in the above embodiments have been described. However, as long as there is no contradiction in the combination of these technical features, they should be considered as falling within the scope recorded in this application.

Through the description of the above embodiments, those skilled in the art can clearly understand that the methods in the above embodiments can be implemented by means of software plus a necessary general hardware platform, and of course, can also be implemented by hardware. In many cases, the former is a better implementation. Based on this understanding, the technical solution of the present application, in essence or the part contributing to the prior art, can be embodied in the form of a software product. The computer software product is stored in a storage medium as above (for example, ROM/RAM, magnetic disk, optical disc), including several instructions for causing a terminal device (which may be a mobile phone, a computer, a server, a controlled terminal device, or a network device, etc.) to execute the method of each embodiment of the present application.

The aforementioned embodiments may be implemented entirely or partially through software, hardware, firmware, or any combination thereof. When it is implemented through software, it may be entirely or partially implemented in the form of a computer program product. The computer program product includes one or more computer instructions. When the computer program instructions are loaded and executed on a computer, they entirely or partially generate the processes or functions according to the embodiments of the present application. The computer may be a general-purpose computer, a special-purpose computer, a computer network, or other programmable apparatuses. The computer instruction may be stored in a storage medium or transmitted from one storage medium to another storage medium. For example, the computer instruction may be transmitted from a website site, a computer, a server, or a data center to another website site, computer, server, or data center via wired means (for example, coaxial cable, optical fiber, digital subscriber line) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid-state disk (SSD)), etc.

The above are only preferred embodiments of the present application and do not limit the patent scope of the present application. Any equivalent structure or equivalent process transformation made using the contents of the description and drawings of this application, or any direct or indirect application to other related technical fields, shall similarly be included within the patent protection scope of this application.

## Claims

1. A processing method, comprising a step of:
S2, determining a random access occasion based on downlink information, wherein the random access occasion is an occasion at which a network device performs preamble detection.

2. The method according to claim 1, wherein the downlink information comprises at least one of radio resource control information, downlink control information, or medium access control information.

3. The method according to claim 2, further comprising at least one of the following:
at least one of a period, a time domain position, and a frequency domain position of the random access occasion being determined by radio resource control information and/or downlink control information;
a time interval, between a slot where a physical downlink control channel carrying downlink control information is located and a slot where a start symbol of the random access occasion is located, being greater than a first threshold;
the random access occasion being used for contention-based random access and/or contention-free random access;
the random access occasion being used for 2-step random access and/or 4-step random access;
the downlink control information comprises at least one of the following:
a random access request field;
a random access configuration index field;
a no system information transmission field;
an indication field for cell discontinuous transmission and/or cell discontinuous reception.

4. The method according to claim 3, wherein the step S2 comprises at least one of the following:
determining the random access occasion based on radio resource control information and/or downlink control information;
determining the random access occasion based on radio resource control information and/or medium access control information.

5. The method according to claim 4, wherein the step S2 comprises at least one of the following:
determining a first random access configuration based on the radio resource control information, and enabling or disabling all random access occasions within a random access configuration period or a random access association period in the first random access configuration according to a random access request field in the downlink control information;
determining a first random access configuration based on the radio resource control information, and enabling or disabling all random access occasions within a random access configuration period or a random access association period in the first random access configuration for a first scenario and/or a second scenario according to a random access request field in the downlink control information;
determining a first random access configuration based on the radio resource control information, determining a second random access configuration according to the first random access configuration and a random access configuration index field in the downlink control information, and determining the random access occasion according to the second random access configuration;
determining a first random access configuration based on the radio resource control information, determining a second random access configuration for a first scenario and/or a second scenario according to the first random access configuration and a random access configuration index field in the downlink control information, and determining the random access occasion according to the second random access configuration;
determining a first random access configuration based on the radio resource control information, and enabling or disabling all random access occasions within a random access configuration period or a random access association period in the first random access configuration according to a random access request field in the medium access control information;
determining a first random access configuration based on the radio resource control information, and enabling or disabling all random access occasions within a random access configuration period or a random access association period in the first random access configuration for a first scenario and/or a second scenario according to a random access request field in the medium access control information;
determining a first random access configuration based on the radio resource control information, determining a second random access configuration according to the first random access configuration and a random access configuration index field in the medium access control information, and determining the random access occasion according to the second random access configuration;
determining a first random access configuration based on the radio resource control information, determining a second random access configuration for a first scenario and/or a second scenario according to the first random access configuration and a random access configuration index field in the medium access control information, and determining the random access occasion according to the second random access configuration.

6. The method according to claim 5, further comprising at least one of the following:
the random access occasion being a valid random access occasion based on the downlink control information;
the random access occasion being a valid random access occasion based on the second random access configuration;
the first scenario being within an inactive time of cell discontinuous reception;
the second scenario being within an active time of cell discontinuous reception;
a preamble format determined by the second random access configuration being the same as a preamble format determined by the first random access configuration;
a period of a random access occasion determined by the second random access configuration being a preset multiple of a period of a random access occasion determined by the first random access configuration;
a number of synchronization signal blocks associated with a random access occasion determined by the second random access configuration being the same as a number of synchronization signal blocks associated with a random access occasion determined by the first random access configuration.

7. The method according to claim 1, wherein the method further comprises:
in response to satisfying a first trigger event, sending msg1 and/or msgA comprising a preamble at the random access occasion.

8. The method according to claim 7, wherein satisfying the first trigger event comprises at least one of the following:
initiating initial access from a radio resource control idle state;
a radio resource control connection re-establishment procedure;
uplink data arrival during radio resource control connected state, and no physical uplink control channel resources available for a scheduling request;
a scheduling request failure;
initiating an access request by radio resource control during synchronization reconfiguration;
transitioning from a radio resource control inactive state to another state;
requesting other system information.

9. A processing method, comprising a step of:
S1, sending downlink information for a terminal device to determine a random access occasion based on the downlink information, wherein the random access occasion is an occasion at which a network device performs preamble detection.

10. The method according to claim 9, wherein the downlink information comprises at least one of radio resource control information, physical downlink control information, or medium access control information.

11. The method according to claim 10, further comprising at least one of the following:
at least one of a period, a time domain position, and a frequency domain position of the random access occasion being determined by radio resource control information and/or downlink control information;
a time interval, between a slot where a physical downlink control channel carrying downlink control information is located and a slot where a start symbol of the random access occasion is located, being greater than a first threshold;
the random access occasion being used for contention-based random access and/or contention-free random access;
the random access occasion being used for 2-step random access and/or 4-step random access;
the downlink control information comprises at least one of the following:
a random access request field;
a random access configuration index field;
a no system information transmission field;
an indication field for cell discontinuous transmission and/or cell discontinuous reception.

12. The method according to claim 11, wherein the step in which the terminal device determines the random access occasion based on the downlink information comprises at least one of the following:
determining, by the terminal device, the random access occasion based on radio resource control information and/or downlink control information;
determining, by the terminal device, the random access occasion based on radio resource control information and/or medium access control information.

13. The method according to claim 12, wherein the step in which the terminal device determines the random access occasion based on the downlink information comprises at least one of the following:
determining, by the terminal device, a first random access configuration based on the radio resource control information, and enabling or disabling all random access occasions within a random access configuration period or a random access association period in the first random access configuration according to a random access request field in the downlink control information;
determining, by the terminal device, a first random access configuration based on the radio resource control information, and enabling or disabling all random access occasions within a random access configuration period or a random access association period in the first random access configuration for a first scenario and/or a second scenario according to a random access request field in the downlink control information;
determining, by the terminal device, a first random access configuration based on the radio resource control information, determining a second random access configuration according to the first random access configuration and a random access configuration index field in the downlink control information, and determining the random access occasion according to the second random access configuration;
determining, by the terminal device, a first random access configuration based on the radio resource control information, determining a second random access configuration for a first scenario and/or a second scenario according to the first random access configuration and a random access configuration index field in the downlink control information, and determining the random access occasion according to the second random access configuration;
determining, by the terminal device, a first random access configuration based on the radio resource control information, and enabling or disabling all random access occasions within a random access configuration period or a random access association period in the first random access configuration according to a random access request field in the medium access control information;
determining, by the terminal device, a first random access configuration based on the radio resource control information, and enabling or disabling all random access occasions within a random access configuration period or a random access association period in the first random access configuration for a first scenario and/or a second scenario according to a random access request field in the medium access control information;
determining, by the terminal device, a first random access configuration based on the radio resource control information, determining a second random access configuration according to the first random access configuration and a random access configuration index field in the medium access control information, and determining the random access occasion according to the second random access configuration;
determining, by the terminal device, a first random access configuration based on the radio resource control information, determining a second random access configuration for a first scenario and/or a second scenario according to the first random access configuration and a random access configuration index field in the medium access control information, and determining the random access occasion according to the second random access configuration.

14. The method according to claim 13, further comprising at least one of the following:
the random access occasion being a valid random access occasion based on the downlink control information;
the random access occasion being a valid random access occasion based on the second random access configuration;
the first scenario being within an inactive time of cell discontinuous reception;
the second scenario being within an active time of cell discontinuous reception;
a preamble format determined by the second random access configuration being the same as a preamble format determined by the first random access configuration;
a period of a random access occasion determined by the second random access configuration being a preset multiple of a period of a random access occasion determined by the first random access configuration;
a number of synchronization signal blocks associated with a random access occasion determined by the second random access configuration being the same as a number of synchronization signal blocks associated with a random access occasion determined by the first random access configuration.

15. A communication device, comprising: a memory, a processor, and a processing program stored on the memory and executable on the processor, when the processing program is executed by the processor, the step of the processing method according to claim 1 or claim 9 is implemented.

16. A storage medium in which a computer program is stored, when the computer program is executed by a processor, the step of the processing method according to claim 1 or claim 9 is implemented.
